# EUROPÄISCHE PATENTANMELDUNG

(11) **EP 1 759 990 A2**
(43) Veröffentlichungstag der Anmeldung: **07.03.2007**
(21) Anmeldenummer: 06026625.1
(22) Anmeldetag: 11.03.2003
(51) Int. Cl.: B64D 9/00, B64F 1/32, B65G 67/08

(54) **System zum Be- und Entladen von Stückgut in einem Laderaum, insbesondere eines Flugzeugs, sowie Zwischenfördereinrichtung oder Fördereinheit hierfür**

(30) Priorität: 11.03.2002 DE 10210575; 11.03.2002 DE 20212383 U; 21.08.2002 DE 10238249
(62) Teilanmeldung aus: 03724913.3
(71) Anmelder: Telair International AB, 224 78 Lund (SE)
(72) Erfinder: Helmner, Anders, 23734 Bjärred (SE)
(74) Vertreter: Kuhnen & Wacker

(57) **Zusammenfassung**

Die vorliegende Erfindung betrifft ein System zum Be- und Entladen von Stückgut (6), wie insbesondere Gepäckstücke oder dergleichen in einem Laderaum (1) eines Flugzeugs, mit einer Förderung des Stückgutes (6) in Richtung auf das innere Ende des Laderaumes (1) beim Beladen bzw. von diesem weg beim Entladen, und mit einem Transport des Stückgutes (6) zwischen der Rollfeldebene und der Laderaumöffnung. Bei dem erfindungsgemäßen System ist das Stückgut (6) beim Beladen in Querrichtung zur Flugzeuglängsachse und auch in Flugzeuglängsrichtung in den Flugzeugrumpf hinein förderbar und im Laderaum (1) ablegbar. Beim Entladen in die Ebene der Laderaumöffnung zurück gefördertes Stückgut (6) ist quer zur Flugzeuglängsachse durch die Laderaumöffnung hindurch weg förderbar. Weiterhin schlägt die Erfindung eine Zwischenfördereinrichtung (2) hierfür vor. Ferner gibt die vorliegende Erfindung weitere Alternativen zum System als auch zur Zwischenfördereinrichtung bzw. Fördereinheit an.

## Beschreibung

Die vorliegende Erfindung betrifft ein System zum Be- und Entladen von Stückgut in einem Laderaum, insbesondere eines Flugzeugs, nach dem Oberbegriff des Anspruchs 1 und 21, sowie eine Zwischenfördereinrichtung hierfür, nach dem Oberbegriff des Anspruchs 16, 30 und 39, als auch eine Fördereinheit hierfür nach dem Oberbegriff des Anspruchs 50.

Beim Be- und Entladen von Stückgut in Laderäume muß dieses generell zunächst von der Umgebung zur Laderaumöffnung und durch diese hindurch gebracht, im Laderaum nach einem freien Platz gesucht und das Stückgut dort abgelegt bzw. aufgestapelt oder verstaut werden. Das Be- und Entladen von Stückgut in einem Laderaum eines Flugzeugs gestaltet sich besonders schwierig, da das Stückgut zunächst - bei einer auf das nähere Umfeld des Flugzeugs beschränkten Betrachtung - vom Rollfeld hinauf zur Laderaumöffnung im Flugzeugrumpf gebracht, dort - unter Vermeidung jeglicher Beschädigung des Flugzeugrumpfes bzw. der diesen ausbildenden Struktur - entgegen genommen und dann an einen freien Platz im Laderaum des Flugzeugs verbracht und ggf. möglichst kompakt gestapelt oder verstaut werden muß. Hierbei sind die häufig engen Raumverhältnisse ein weiteres Erschwernis, da beispielsweise bei einer Laderaumtiefe von 8 m oder mehr und einer Laderaumhöhe von nur etwa 1,15 m in einer Boeing 737 Personal, das mit dem Be- und Entladen des Flugzeugs betraut ist, nur in gebückter, kniender oder gehockter Haltung arbeiten kann. Dabei muß die Entfernung von der Laderaumöffnung zum hinteren Ende des Laderaums auf den Knien rutschend überwunden werden. Beim Verstauen bzw. Stapeln des Stückguts muß das Personal dieses häufig sich über die Schulter nach hinten drehend aufnehmen, hoch wuchten und nach vorne ablegen. Dabei können Beschädigungen oder Verletzungen der Muskeln, Sehnen oder Bänder als auch des Stützapparats leicht auftreten. Weiter erschwerend kommt hinzu, daß aus Wirtschaftlichkeitsgründen heutzutage wenigstens 5 Tonnen Stückgut innerhalb von weniger als 10 Minuten be- oder entladen werden müssen. Hierbei muß das im Flugzeugrumpf im Laderaum beschäftigte Personal zudem darauf achten, daß weder Stückgut beschädigt noch die Struktur des Laderaums verletzt wird. Dies führt dazu, daß die ohnehin den Stützapparat des betroffenen Personals stark belastenden Bewegungen schnell und unachtsam ausgeführt werden, was das Verletzungsrisiko beim Personal weiter steigert.

Um Stückgut vom Rollfeld zur Laderaumöffnung bzw. in den im Inneren des Flugzeugs direkt hinter der Laderaumöffnung liegenden Nahbereich zu bringen, von dem aus es dann vom Personal im Laderaum verstaut werden kann, sind im Prinzip z.B. folgende Ansätze bekannt:

Die DE 199 61 349 A1 beschreibt ein fahrbares Gerät zum Be- und Entladen von Flugzeugen, mit einem Fahrgestell und einer auf dem Fahrgestell angeordneten Fördereinrichtung, wie beispielsweise einem Förderband. Um mittels dieses fahrbaren Geräts verschiedenartige Lasten wie beispielsweise Stückgut, vom Rollfeld oder von einem auf dem Rollfeld beim Flugzeug ankommenden Transportfahrzeugs in das Flugzeug fördern zu können, wird in der DE 199 61 349 A1 vorgeschlagen, daß dieses fahrbare Gerät einen Hauptförderer aufweist, der in seiner Höhe und in seiner in Förderrichtung verlaufenden Neigung gegenüber dem Fahrgestell verstellbar ist, sowie mindestens einen an einem Längsende des Hauptförderers um eine horizontale Querachse gegenüber diesem verschwenkbaren Übergabeförderer aufweist. Mit einem solchen fahrbaren Gerät kann Stückgut vom Rollfeld nach oben zur Laderaumöffnung des Flugzeugs verbracht und durch diese hindurch ins Flugzeug hinein übergeben werden.

Da jedoch nicht auf jedem Flughafen solcherlei fahrbares Transportgerät zur Verfügung steht, ist in der DE 297 21 959 U1 vorgeschlagen worden, ein solches Gerät im Flugzeug mitzuführen. Die in der DE 297 21 959 U1 beschriebene Gepäckladevorrichtung für Flugzeuge mit einem Bandförderer ist auf einer Flugzeugfrachtpalette montiert und im Flugzeugrumpf verstaut. Beim Betrieb wird der Bandförderer aus der Ladeöffnung des Flugzeugs herausgefahren, zum Rollfeld nach unten geschwenkt, die erforderliche Länge eingestellt und mit dem unteren Ende dann auf dem Rollfeld abgestützt, so daß Stückgut vom Rollfeld zur Laderaumöffnung hinauf befördert oder aus dieser heraus hinunter transportiert werden kann.

Die WO 98/54073 beschreibt ein mit dessen vorderen Abschnitt durch eine Laderaumöffnung in den Laderaum eines Flugzeugs hineinführbares, dort wiederum über den Laderaumboden vermittels Rollen verfahrbares Förderorgan, das ein vom Rollfeld bis zum hinteren Ende des Laderaum führendes Förderband bereit stellen soll, zur Unterstützung des auch hier manuell von einer Person auszuführenden Be- und Entladevorgangs. Zum Betrieb des Förderorgans wird dieses auf dem Rollfeld an das Flugzeug herangeführt, ein erster Abschnitt einer schiefen Ebene gleichend auf die Höhe der Laderaumöffnung gebracht, ein weiterer Abschnitt in die Laderaumöffnung hineingeführt, dort um 90° umgebogen und dann ein weiterer Abschnitt parallel zur Bordwand im Laderaum von der Laderaumöffnung bis zum hinteren Ende des Laderaums erstreckt. Ein zusätzlicher Tisch, der am hinteren Ende auf dem Boden aufgerichtet wird, soll sich über die gesamte Breite des Laderaums erstrecken und kann in der Höhe variiert werden. Damit können Koffer, Säcke oder dergleichen Güter Be- und Entladen werden, wobei diese Güter beim Beladen vermittels des Förderbandes vom Rollfeld bis zum Ende des Förderbandes im Laderaum vor den Tisch transportiert und dort von der am Tisch knieenden Person auf den Tisch gezogen und über diesen weiterziehend dann oben auf den aufzuschichtenden Stückgutstapel geschoben werden. Das in der WO 98/540734 beschriebene Gerät hat zum Nachteil, daß sowohl bei unsachgemäßer Handhabung des Tisches als auch bei nicht sachgemäßer Handhabung des Förderorgans eine Verletzung bzw. Beschädigung der Flugzeugstruktur zwangsläufig zu befürchten ist. Wenn der Tisch mit darauf liegendem Stückgut in belastetem Zustand in der Höhe verändert wird, besteht die Gefahr, daß dessen an die Bordwand angrenzenden Enden diese sofort beschädigen. Beim Einführen des extrem langen und unhandlichen Förderbandes ist eine Beschädigung der Laderaumöffnung nicht auszuschließen. Zudem ist dieses Hilfsgerät wenig hilfreich, da es immer dann, wenn eine Stückgutreihe aufgeschichtet ist, um ein Stück zurückgefahren, neu positioniert und mit dem ebenfalls neu auszurichtenden Tisch verbunden werden muß.

In der DE 100 07 332 A1 ist eine alternative Ausführungsform eines auf dem Rollfeld verfahrbaren Basisfahrzeugs mit einem bis in den Laderaum hineinreichenden endlosen Förderband diskutiert. Die DE 100 07 332 A1 schlägt ein reversierbares Fördermittel für Stückgüter mit schwenkbarem und in der Höhe und Länge verstellbaren Ausleger zum Be- und Entladen von Reisegepäckstücken bei Passagierflugzeugen vor. Zwischenübergabestationen sollen vermieden werden. Den Umschlag der Gepäckstücke bzw. das Verstauen und Entnehmen derselben im Laderaum bewerkstelligen auch hier wiederum Personen vor Ort von Hand.

Um die Arbeit des Personals im Laderaum zu erleichtern, ist von der Anmelderin beispielsweise in der DE 42 38 095 A1 eine Beladevorrichtung für einen Laderaum eines Flugzeugs vorgeschlagen worden. Diese im rauhen Alltag beim Be- und Entladen von Flugzeugen bewährte Laderaumbeladevorrichtung wird von der Anmelderin u. a. mit dem Prospekt "The sliding carpet loading system" erfolgreich beworben. Diese den Boden des Laderaums flächig abdeckende Transporteinrichtung dient zur, insbesondere taktweisen, Förderung des Stückgutes in Richtung auf das Innere des Laderaumes bzw. dessen hinteres Ende beim Beladen bzw. von diesem weg beim Entladen, wobei die Transporteinrichtung mit deren vorderem Ende bis in den Bereich der Laderaumöffnung im Flugzeugrumpf reicht, und ist in einer besonders erfolgreichen Ausführungsform als Transportteppich ausgestaltet.

Diese Geräte bzw. Transporteinrichtungen helfen zwar, den Einsatz menschlicher Arbeitskraft im Laderaum zu erleichtern oder zu reduzieren, sie machen jedoch den Einsatz menschlicher Arbeitskraft, insbesondere im Bereich der Laderaumluke, immer noch erforderlich. Personal muß auch weiterhin in äußerst unbequemer Arbeitshaltung das vom äußeren Förderorgan vom Rollfeld zur Laderaumöffnung hinauf beförderte Gepäck bzw. Stückgut entgegennehmen und über die Breite des Flugzeugrumpfes auf dem vorderen Ende der beispielsweise als Transportteppich ausgebildeten Transporteinrichtung im Laderaum ablegen und mit deren Hilfe sukzessive in das Innere des Laderaums befördern. Dementsprechend muß zum Entladen wiederum Personal eingesetzt werden, das mittels der Transporteinrichtung im Laderaum das Stückgut sukzessive zu sich in den Bereich der Laderaumöffnung heranholt, das Stückgut aufnimmt, in beschwerlicher Haltung, sei es gebückt oder gehockt zum in die Laderaumöffnung hineinragenden Ende der äußeren Fördereinrichtung schleppt, dort aufgibt und mit der äußeren Fördereinrichtung dann zum Rollfeld hinunter befördert.

Zudem ist das mit diesen Arbeiten betraute Personal häufig schlecht bezahlt, unzureichend ausgebildet und damit nur ungenügend motiviert. Dementsprechend kommt es oft zu versehentlichen Beschädigungen der Flugzeugstruktur im Laderaum und insbesondere im Bereich der Laderaumöffnung, obgleich diese ausdrücklich vermieden werden sollen. Dies führt dann bei deren Auftreten zu immensen Kosten aufgrund der erforderlichen Reparaturen und des damit verbundenen Stillstands des Flugzeugs.

Dementsprechend ist es Aufgabe der vorliegenden Erfindung unter Vermeidung der vorstehenden Nachteile ein System vorzuschlagen, das die bekannten Transporteinrichtungen im Laderaum des Flugzeugs mit den außerhalb des Flugzeugs befindlichen Förderorganen so zu einem Gesamtkonzept verbindet, daß Stückgut automatisch ohne Einsatz von Personal im Laderaum vom Rollfeld beim Beladen in den Laderaum verbracht und dort automatisch verstaut und beim Entladen wieder automatisch aus dem Laderaum zurück auf das Rollfeld transportiert werden kann.

Weiterhin ist es Aufgabe der vorliegenden Erfindung, eine hierfür geeignete Zwischenfördereinrichtung anzugeben.

Ferner ist es Aufgabe der vorliegenden Erfindung, ein System sowie eine hierfür geeignete Zwischenfördereinrichtung vorzuschlagen, mit dem bzw. mit der die bekannten Transporteinrichtungen im Laderaum des Flugzeugs mit den außerhalb des Flugzeugs befindlichen Förderorganen so zu einem Gesamtkonzept kombiniert werden können, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Schließlich ist es Aufgabe der vorliegenden Erfindung, eine Zwischenfördereinrichtung anzugeben, mit der ohne Verfügbarkeit bekannter Transporteinrichtungen im Laderaum des Flugzeugs und lediglich mit Verfügbarkeit außerhalb des Flugzeugs befindlicher bis in den Laderaum hinein reichender Förderorgane so ein Gesamtkonzept realisiert werden kann, daß Stückgut vom Rollfeld beim Beladen in den Laderaum verbracht und dort verstaut und beim Entladen wieder aus dem Laderaum zurück auf das Rollfeld transportiert werden kann, ohne dabei die Gesundheit des eingesetzten Personals zu gefährden.

Diese Aufgabe wird jeweils gelöst durch die Merkmale des Anspruchs 1, 16, 21, 30, 39 oder 50.

Die vorliegende Erfindung schlägt erstmals ein System zum Be- und Entladen von Stückgut in einem Laderaum, insbesondere eines Flugzeugs, vor, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderen Ende bis in den Bereich der Laderaumöffnung im Flugzeugrumpf reicht, und mit einem der Außenseite des Flugzeuges an die Laderaumöffnung anschließenden Förderorgans zum Transport des Stückgutes zwischen der Rollfeldebene und der Laderaumöffnung, wobei erstmals vorgesehen ist, daß zwischen den flugzeugseitigen Ende des Förderorgans und dem vorderen Ende der Transporteinrichtung im Laderaum wenigstens eine Zwischenfördereinrichtung angeordnet ist, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hinauf weg förderbar ist.

Damit kann erstmals in vorteilhafter Weise auf den Einsatz menschlicher Arbeitskraft im Laderaum beim Be- und Entladen von Stückgut vollständig verzichtet werden. Auf diese Weise werden nicht nur die damit verbundenen Personalkosten eingespart und somit Betriebskosten gesenkt, sondern zugleich das Beschädigungsrisiko der Struktur im Laderaum gegen Null reduziert. Mit der Reduzierung des Beschädigungsrisikos wird in vorteilhafter Weise zugleich das Risiko der Nutzungsausfallzeit für Reparaturen solcher Beschädigungen und damit die enorm hohen Reparaturkosten im Prinzip auf Null herunter gefahren. Ferner bietet das erfindungsgemäße System den Vorteil, daß es den Laderaum automatisch be- und entlädt und zu jeder Tages- und Nachtzeit die vom Betreiber gewünschten Mindestdurchsatzraten von wenigstens 5 Tonnen innerhalb etwa 10 Minuten ausfallsicher auch bei Streiks oder ähnlichen Ereignissen garantiert. Weiterhin wird durch das erfindungsgemäße System erstmals bei einer automatischen Be- und Entladung des Laderaums eine optimale Ausnutzung der verfügbaren Laderaumfläche als auch des verfügbaren Laderaumvolumens ermöglicht, da in einer bevorzugten Ausführungsform das erfindungsgemäße System mit geeigneten Sensoren, Kameras, Regelkreisen und/oder künstlicher Intelligenz ausgestaltet werden kann, so daß das Stückgut nicht nur automatisch sondern gezielt dort im Laderaum abgelegt bzw. verstaut werden kann, wo beispielsweise noch Lücken frei sind.

Des weiteren kann das erfindungsgemäße System in vorteilhafter Weise so ausgestaltet werden, daß es dauerhaft im Laderaum des Flugzeugs montiert ist. Hierbei kann in vorteilhafter Weise auf die von Flugzeugtyp zu Flugzeugtyp unterschiedlichen Randbedingungen, wie beispielsweise örtliche Verfügbarkeit von zur Aufnahme und Ableitung von Kräften vorgesehener Lastaufnahmepunkte in der Struktur, räumliche Abmaße des Laderaums, geometrische Ausgestaltung des Laderaums, Lage der Laderaumöffnung relativ zum Laderaum, etc., angepaßt werden. Bei einem auf diese Weise an die örtlichen Gegebenheiten eines bestimmten Flugzeugtyps angepaßten erfindungsgemäßen System zum Be- und Entladen des Laderaums ist eine unbeabsichtigte Verletzung der Flugzeugstruktur im Bereich des Laderaums und insbesondere im Bereich der Laderaumöffnung vollständig ausgeschlossen, da durch die Befestigung der Zwischenfördereinrichtung im Laderaum selbige während deren Einsatz nicht durch die Laderaumöffnung hindurch in den Laderaum verbracht werden muß, so daß die dabei zu befürchtenden Beschädigungen definitiv ausbleiben.

Hierzu kann das erstmalig vorgeschlagene System und insbesondere die hierfür vorgesehene Zwischenfördereinrichtung beispielsweise aus besonders leichten Materialien, wie zwischenzeitlich verfügbares hochfestes Aluminium, Kohlefaserverbundwerkstoffen oder Composites hergestellt werden. Bei Verwendung entsprechend steifer Profile aus solchen Materialien ist ein derart zufriedenstellend geringes Gesamtgewicht der Zwischenfördereinrichtung realisierbar, daß ein Verbleib der Zwischenfördereinrichtung im Laderaum des Flugzeugs hinsichtlich dessen maximal verfügbarer Transportkapazität nicht negativ ins Gewicht fällt. Derlei biegesteife und zugleich extrem leichte Profile bieten nicht nur den Vorteil eines insgesamt besonders geringen Gewichts der Zwischenfördereinrichtung, sie ermöglichen zudem die Herstellung einer Zwischenfördereinrichtung, die problemlos den hohen Belastungen im alltäglichen Betrieb gewachsen ist, wie beispielsweise mit Blick auf das teilweise hohe Gewicht von damit zu förderndem Stückgut oder mit Blick auf die hohen Lastspitzen bei großen Maßendurchsätzen an Stückgut für ein besonders schnelles Be- und/oder Entladen.

Bei einer ebenfalls bevorzugten Variante des erfindungsgemäßen Systems kann die Zwischenfördereinrichtung mechanisch mit dem auf dem Rollfeld verfahrbaren Förderorgan verbunden werden. Dabei kann das auf dem Rollfeld verfahrbare Förderorgan an dessen der Laderaumöffnung zugewandten Ende um die Zwischenfördereinrichtung im wesentlichen geradlinig verlängert werden. Dies bietet den Vorteil, daß weniger auf das Gewicht zu achten ist, und die Zwischeneinrichtung damit materialtechnisch preiswerter und dennoch ausreichend fest bzw. belastbar ausgestaltet werden kann. Bei dieser bevorzugten Kombination ist eine Beschädigung des direkten Bereichs um die Laderaumöffnung nicht gänzlich auszuschließen, da die Zwischenfördereinrichtung quer zur Flugzeuglängsrichtung durch die Laderaumöffnung eingebracht und positioniert werden muß. Bei entsprechend verständiger Arbeitsweise ist dieses Beschädigungsrisiko jedoch unbeachtlich. Zudem ist eine Beschädigung des Laderaums als solchem bzw. der diesen ausbildenden Struktur auf jeden Fall auszuschließen.

Mit dem erfindungsgemäßen System und insbesondere mit der hierfür vorgesehenen Zwischenfördereinrichtung kann die Zeit für das Be- und Entladen eines Flugzeugs verkürzt und somit die Betriebskosten gesenkt werden.

Vorteilhafte Weiterbildungen der Erfindung ergeben sich aus den Merkmalen der Unteransprüche.

So können bei dem erfindungsgemäßen System die beim Be- und Entladen bewegten Stückgüter auf der Transporteinrichtung im Laderaum beim Beladen gezielt abgelegt und beim Entladen von dort gezielt aufgenommen bzw. weg gefördert werden. Dies bietet den großen Vorteil, daß der verfügbare Laderaum und insbesondere dort freie Flächen optimal mit Ladegut, Stückgut, Gepäckstücke oder dgl. belegt werden kann. Insbesondere bei einer Automatisierung vermittels entsprechender Sensoren, Kameras, Regelkreisen, künstlicher Intelligenz oder dgl. kann der Beladungszustand des Laderaums permanent überwacht und das System entsprechend darauf abgestellt werden.

Hierfür ist in einer weiter bevorzugten Ausführungsform vorgesehen, daß über dem Boden des Laderaums horizontal zwischen der Zwischenfördereinrichtung und dem Boden des Laderaums im Bereich der Laderaumöffnung eine den Boden des Laderaums als auch den bodenseitigen Bereich der Laderaumöffnung flächig abdeckende Schale angeordnet ist. Diese Schale, insbesondere Auffangschale, bietet zugleich den Vorteil, daß auch bei bis in den unteren Bereich des Rumpfes hinein gezogenen Laderaumöffnungen die volle Breite des Laderaums mit Stückgut beladen werden kann, ohne das die Gefahr besteht, daß Stückgut bei einem nie gänzlich auszuschließenden "über Eck Abrutschen" von dem der Laderaumöffnung zugewandten Ende des äußeren Förderorgans herunter und zwischen dem Förderorgan und der Laderaumöffnung hindurch im schlimmsten Fall bis zum Rollfeld hinunter fällt.

In einer weiter bevorzugten Ausführungsform ist die Schale, insbesondere Auffangschale, die auch als "Door Way Unit" (kurz: DWU) bezeichnet wird, entlang einer Linie parallel zur Flugzeuglängsachse um- oder einklappbar. Damit wird in weiter vorteilhafter Weise sichergestellt, daß nach einem Be- oder Entladevorgang jener Abschnitt dieser Schale bzw. DWU, welcher der Laderaumöffnung benachbart ist, aus dem Nahbereich der Laderaumöffnung heraus ins Innere des Laderaums zur Mitte hin umgeklappt werden kann, so daß danach die Laderaumöffnung vollständig frei gegeben und mit der Laderaumtüre verschließbar ist.

Gemäß einer weiter bevorzugten Ausführungsform ist vorgesehen, daß die Transporteinrichtung im Laderaum ein Transportteppich ist. Dies bietet neben dem Vorteil einer kontinuierlichen, diskontinuierlichen oder taktweisen Förderung des Stückgutes ins Innere des Laderaums hinein zudem ein wesentliches Platzsparpotential, da ein solcher Transportteppich eine besonders geringe Bauhöhe aufweist und damit wenig Staukapazität des Laderaums für den Einbau einer z.B. als Transportteppich ausgebildeten Transporteinrichtung verloren geht.

Bei einer weiter bevorzugten Ausführungsform des erfindungsgemäßen Systems weist die Zwischenfördereinrichtung wenigstens ein in Förderrichtung längenveränderbares erstes Förderorgan, vorzugsweise ein Förderband, auf. Dieses nimmt beim Beladen Stückgut im Bereich der Laderaumöffnung vom flugzeugseitigen Ende des äußeren Förderorgans entgegen und fördert dieses quer zur Flugzeuglängsachse weiter, wobei sich an dessen flugzeugrumpfinneren Ende ein weiteres Förderorgan, vorzugsweise ein Förderband anschließt, welches das Stückgut im ersten Förderorgan entgegennimmt und in Flugzeuglängsrichtung zum vorderen Ende der im Laderaum vorhandenen Transporteinrichtung befördert. Damit wird in vorteilhafter Weise das Entgegennehmen von Stückgut im Bereich der Laderaumöffnung und dessen Weitertransport 90° um die Ecke auf engstem Raum, und zugleich optimal an die jeweilige Breite unterschiedlicher Flugzeugtypen angepaßt, sichergestellt.

Entsprechend einer weiter bevorzugten Ausführungsform des erfindungsgemäßen Systems nimmt das zweite Förderorgan beim Entladen Stückgut vom vorderen Ende der im Laderaum vorhandenen Transporteinrichtung auf und fördert dies in Flugzeuglängsrichtung weg und übergibt es an das erste Förderorgan, welches das Stückgut quer zur Flugzeuglängsachse zur Laderaumöffnung fördert und an das äußere Förderorgan zur Weiterförderung übergibt. Damit wird in vorteilhafter Weise auch ein Entladen des Stückguts mit einer Bewegung desselben 90° um die Ecke aus dem Laderaums heraus in den Nahbereich der Laderaumöffnung hinein garantiert.

Gemäß einer weiter bevorzugten Ausführungsform des Systems verfügt das flugzeugrumpfinnere Ende des ersten Förderorgans der Zwischenfördereinrichtung über eine Schulter, die an einer im Gepäckladeraum senkrecht orientierten ersten Schiene längs derselben vertikal verschieblich angelenkt ist. Damit kann in vorteilhafter Weise eine Höhenverstellung des Endpunktes des ersten Förderorgans realisiert werden. Somit ist sichergestellt, daß Stückgut über die volle Höhe des Laderaums gestapelt werden kann.

Entsprechend einer weiter bevorzugten Ausführungsform des Systems ist vorgesehen, daß die senkrecht orientierte erste Schiene ihrerseits von wenigstens einer an der Decke oder im Boden befestigten waagerecht orientierten zweiten Schiene geführt ist. Damit kann eine Verschiebung des Anlenkpunktes quer zur Flugzeuglängsachse über die Breite des Flugzeugrumpfes sichergestellt werden. Somit ist in vorteilhafter Weise garantiert, daß Stückgut nicht nur über die gesamte Höhe an einem Punkt des Laderaums sondern über dessen gesamte Breite und aufgrund der in die Tiefe fördernden Transporteinrichtung auch über dessen gesamte Tiefe und damit über dessen gesamtes Volumen gestapelt bzw. hinein transportiert und beim Entladen natürlich wieder herausgeholt werden kann.

Gemäß einer weiter bevorzugten Ausführungsform des Systems ist das zweite Förderorgan der Zwischenfördereinrichtung relativ zum ersten Förderorgan derselben verschieblich gelagert, vorzugsweise quer zur Flugzeuglängsachse. Damit wird in vorteilhafter Weise der Operationsradius des zweiten Förderorgans der Zwischenfördereinrichtung wesentlich erweitert. In einer weiter bevorzugten Ausführungsform des Systems ist das zweite Förderorgan in Flugzeuglängsrichtung längenveränderbar. Auf diese Weise kann der Operationsradius der Zwischenfördereinrichtung ebenfalls vorteilhaft vergrößert werden. Insbesondere ist damit sichergestellt, daß bei besonders breiten Laderaumöffnungen im Vergleich zu einer relativ schmalen Zwischenfördereinrichtung Stückgut dennoch in Flugzeuglängsrichtung bis zum vorderen Ende der im Laderaum befindlichen Transporteinrichtung gefördert und an diese übergeben wird.

In einer weiter bevorzugten Ausführungsform des Systems ist das zweite Förderorgan als ein in Flugzeuglängsrichtung beweglicher Schieber ausgebildet. Dies bietet eine kostengünstige Alternative zur Ausgestaltungsvariante in Form eines Förderbandes. Darüber hinaus läßt sich die Ansteuerung und Funktionsweise eines längsbeweglichen Schiebers mit entsprechenden Stellgliedern bzw. Endschaltern einfacher ausbilden. Dem gegenüber bietet die Ausgestaltungsform eines Förderbandes den Vorteil des geringen Verschleißes und der höheren Durchsatzraten.

Gemäß einer weiter bevorzugten Ausführungsform des Systems ist das zweite Förderorgan als eine schräg anstellbare Gleitfläche ausgebildet. Dies ist im Prinzip die einfachste Variante, wie Stückgut quer zur Hauptförderrichturlg des ersten Förderorgans der Zwischenfördereinrichtung, also in Längsrichtung in den Laderaum hinein durch sanftes Abgleiten transportiert werden kann.

Einer weiter bevorzugten Ausführungsform des Systems zufolge verfügt das Förderorgan zum Entladen über einen Greifer zum Erfassen von Stückgut. Dieser Greifer kann so ausgebildet sein, daß er mit dem Erfassen eines Stückgutes an dessen Griff zupackt, dieses auf das zweite Förderorgan der Zwischenförderorgan zieht und von diesem weg transportieren läßt. Dieser Greifer kann in einer besonders bevorzugten Ausführungsform mit Sensoren, Kameras, Regelkreisen und/oder künstlicher Intelligenz ausgestattet sein, so daß gezielt bestimmte Gepäckstücke bzw. Stückgüter aus dem Laderaum heraus ausgewählt und ergriffen werden können.

Einer weiter bevorzugten Ausführungsform des Systems zufolge ist das zweite Förderorgan der Zwischenfördereinrichtung ein Förderband, das über einer darunter angeordneten steifen Gleitplatte verläuft, wobei die Gleitplatte mit dem Förderband zwischen zwei Stückgüter einschiebbar ist und wobei das obere Stückgut mit dem Förderband wegförderbar ist. Damit kann eine kostengünstige Variante zum möglichst effizienten Entladen des Laderaums bereitgestellt werden.

Die gestellte Aufgabe wird weiterhin durch die Merkmale des Anspruchs 16 gelöst.

Dabei wird eine Zwischenfördereinrichtung zum Be- und Entladen von Stückgut in Laderäumen von Flugzeugen, insbesondere zur Verwendung in einem vorstehend diskutierten System zum Be- und Entladen von Stückgut, vorgeschlagen, bei der erstmals vorgesehen ist, daß diese wenigstens ein in Förderrichtung längenveränderbares erstes Förderorgan, vorzugsweise ein Förderband, aufweist, das beim Beladen Stückgut im Bereich der Laderaumöffnung vom flugzeugseitigen Ende des äußeren Förderorgans entgegennimmt und quer zur Flugzeuglängsachse weiterfördert. Dabei schließt sich an dessen flugzeugrumpfinneres Ende ein weiteres Förderorgan an, vorzugsweise ein Förderband, welches das Stückgut vom ersten Förderorgan entgegen nimmt und in Flugzeuglängsrichtung zum vorderen Ende der im Laderaum vorhandenen Transporteinrichtung weiter fördert und auf dieser ablegt. Beim Entladen nimmt das zweite Förderorgan der Zwischenfördereinrichtung Stückgut vom vorderen Ende der im Laderaum vorhandenen Transporteinrichtung auf, fördert dieses in Flugzeuglängsrichtung weg und übergibt es an das erste Förderorgan der Zwischenfördereinrichtung, welches das Stückgut quer zur Flugzeuglängsachse zur Laderaumöffnung weiter transportiert und dort an das äußere Förderorgan zur Weiterförderung übergibt.

Die zum erfindungsgemäßen System vorstehend diskutierten Vorteile gelten ungeschmälert auch für die erfindungsgemäße Zwischenfördereinrichtung.

Insbesondere kann die Zwischenfördereinrichtung in vorteilhafter Weise im Laderaum des Flugzeugs verbleibend montiert werden und hierfür auf die jeweiligen Einbauverhältnisse eines bestimmten Flugzeugtyps optimiert werden. Zur Stromversorgung kann dann das Bordnetz des Flugzeugs herangezogen werden. Alternativ kann die erfindungsgemäße Zwischenfördereinrichtung auch am der Laderaumöffnung zugewandten bzw. in diese hineinragenden Ende des äußeren, auf dem Rollfeld bewegbaren Förderorgans angebracht und ggf. von diesem mit einer Betriebsspannung versorgt werden. Damit ist in vorteilhafter Weise sichergestellt, daß das zum Be- und Entladen erforderliche Equipment bereits auf dem Flugplatz von der mit diesen Aufgaben betrauten Firma bereitgestellt und im Umgang mit diesen Geräten geschult werden kann.

In einer weiter bevorzugten Ausführungsform der erfindungsgemäßen Zwischenfördereinrichtung verfügt das flugzeugrumpfinnere Ende des ersten Förderorgans der Zwischenfördereinrichtung über eine Schulter, mittels der es an einer beispielsweise im Gepäckladeraum im wesentlichen senkrecht orientierten ersten Schiene längs derselben vertikal verschieblich angelenkt ist. Damit kann in vorteilhafter Weise eine Höhenverstellung des dem Flugzeuginneren zugewandten Ende des ersten Förderorgans über die gesamte Höhe des Gepäckladeraums sichergestellt werden. Damit wird, wie vorstehend bereits zum System diskutiert, der Vorteil erreicht, daß die gesamte Ladehöhe des Gepäckraums nutzbar wird. Hierbei kann im Falle der im Flugzeug verbleibenden Variante die senkrecht orientierte Schiene mit deren oberen und/oder unteren Ende gegen eine zweite im wesentlichen waagrecht orientierte Schiene in deren Längsrichtung verfahrbar abgestützt sein. Die waagrechte Schiene ihrerseits kann gegen die Struktur des Laderaums in geeigneter Form abgestützt werden. Im Falle der mit dem äußeren Förderorgan verbundenen Variante kann die senkrechte Schiene über ein entsprechendes Gestell oder über einen geeignet ausgebildeten Rahmen waagerecht verschieblich geführt werden. Es ist ebenso denkbar, eine Anlenkung der Schulter des Zwischenförderorgans zuerst an einer im wesentlichen waagerecht orientierten Schiene vorzusehen, die ihrerseits längs einer senkrecht orientierten Schiene verschieblich gelagert ist, wobei die senkrecht orientierte Schiene beim Verbleib des Zwischenförderorgans im Flugzeug sich gegen die Flugzeugstruktur abstützen kann und bei einer Kombination mit dem auf dem Rollfeld verfahrbaren Förderorgan über einen Rahmen, ein Gestell oder dergleichen mit diesem verbunden werden kann.

Dementsprechend wird in einer weiter bevorzugten Ausführungsform der Zwischenfördereinrichtung vorgeschlagen, daß die senkrecht orientierte erste Schiene ihrerseits von wenigstens einer an der Decke und dem Boden befestigten waagerecht orientierten zweiten Schiene geführt ist, zur Verschiebung des Anlenkpunktes quer zur Flugzeuglängsachse.

Damit ist nicht nur sichergestellt, daß die gesamte Breite des Laderaums nutzbar wird, sondern es wird auch eine möglichst stabile, verwindungsfreie Konstruktion erzielt. Anstelle einer am Boden oder an der Decke befestigten, waagerecht orientierten zweiten Schiene kann die erste Schiene auch in waagerechter Richtung in einem entsprechend ausgebildeten Gestell oder Rahmen, welches seinerseits am äußeren Förderorgan befestigt ist, geführt sein, so daß auch bei der Variante einer am äußeren Förderorgan befestigten Zwischenfördereinrichtung die volle Nutzbarkeit der gesamten Laderaumbreite und Tiefe als auch Höhe in vorteilhafter Weise gewährleistet ist.

Die gestellte Aufgabe wird ebenso gelöst durch die Merkmale des Systems gemäß Anspruch 21 als auch jeweils durch die Merkmale der Zwischenfördereinrichtung gemäß Ansprüchen 30 oder 39.

Dabei wird ein System zum Be- und Entladen von Stückgut in einem Laderaum, insbesondere eines Flugzeugs, mit einer den Boden des Laderaums flächig abdeckenden Transporteinrichtung zur, insbesondere taktweisen, Förderung des Stückgutes in Richtung auf das innere Ende des Laderaums beim Beladen bzw. von diesem weg beim Entladen, wobei die Transporteinrichtung mit deren vorderem Ende bis in den Bereich der Laderaumöffnung im Flugzeugrumpf reicht, und mit einem an der Außenseite des Flugzeuges an die Laderaumöffnung anschließenden Förderorgan zum Transport des Stückgutes zwischen der Rollfeldebene und der Laderaumöffnung, vorgeschlagen. Bei diesem System ist erstmals zwischen dem flugzeugseitigen Ende des äußeren Förderorgans und dem vorderen Ende der Transporteinrichtung im Laderaum wenigstens eine Zwischenfördereinrichtung angeordnet, mit der das Stückgut beim Beladen zunächst im wesentlichen quer zur Flugzeuglängsachse tiefer in den Flugzeugrumpf hinein förderbar ist, und woraufhin das Stückgut dann im Laderaum manuell drehbar und weiter im wesentlichen in Flugzeuglängsrichtung beförderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut im wesentlichen quer zur Flugzeuglängsachse durch die Laderaumöffnung hindurch weg förderbar ist.

Diese zweite Variante zur vorstehend diskutierten ersten Variante des erfindungsgemäßen Systems bietet im wesentlichen dieselben Vorteile, wie sie vorstehend zur ersten Variante des Systems diskutiert worden sind.

Darüber hinaus ergeben sich bei dieser teilautomatischen Variante des erfindungsgemäßen Systems weitere Vorteile. So kann beispielsweise die Arbeitskraft ohnehin vorhandenen Bodenpersonals beim Be- und Entladen von Flugzeugen weiterhin genutzt werden. Arbeitsplätze werden nicht unnötig wegrationalisiert. Die Arbeitsbedingungen bei den derart erhaltenen Arbeitsplätzen werden wesentlich verbessert. Denn die im Laderaum tätige Person ist beim Be- und Entladen von Stückgut nicht mehr länger der Gefahr ausgesetzt, daß sie irgendwelche schweren Gepäckstücke mit einer entsprechenden Verdrehung des Oberkörpers bzw. des Rückgrates gegenüber der Hüfte mit entsprechendem Kraftaufwand über die Schulter beispielsweise von hinten rechts unten nach vorne links oben oder umgekehrt oder anders wuchten müßte. Damit sind die aus dem Stand der Technik bekannten und vorstehend diskutierten massiven Gefährdungen des Rückgrates oder der Bandscheiben mit den daraus resultierenden Langzeitschädigungen des im Laderaum tätigen Personals, die selbst bei den aus der DE 100 07 332 A1 oder der aus der WO 98/54073 bekannten Fördereinrichtungen nicht vermieden sind, bei dem hier diskutierten erfindungsgemäßen System ausgeschlossen.

Denn eine im Laderaum tätige Person braucht lediglich die von draußen automatisch heran und in den Laderaum hinein geförderten Stückgüter, beispielsweise im Bereich der Laderaumöffnung mit in Fahrzeuglängsrichtung orientierter Brust bzw. orientiertem Blick z.B. sitzend oder kniend, durch die seitlich von dieser Person befindliche Laderaumöffnung entgegenzunehmen. Dann kann sie das vor sich auf der Zwischenfördereinrichtung drehbar liegende Stückgut ohne Belastung des Rückens und besonderen Kraftaufwand drehender Weise in Richtung Flugzeuglängsrichtung ausrichten, um es dann mit einem leichten Schubs von sich weg zur den Boden des Laderaums flächig abdeckenden Transporteinrichtung hin weiter zu bewegen.

Das aus dem Stand der Technik bekannte, gesundheitsgefährdende Wuchten, Werfen oder Heben von Gepäckstücken mit Verdrehung des Rückens von der Hüfte über die Schulter entfällt dabei völlig. Damit werden Arbeitsplätze nicht nur gesichert, sondern zugleich das Verletzungsrisiko drastisch reduziert und dennoch zugleich die Produktivität und Effizienz beim Be- und Entladen von Stückgut gegenüber aus dem Stand der Technik bekannten Lösungen wesentlich gesteigert. Nicht zuletzt hilft ein derart verbesserter Arbeitsplatz das Arbeitsklima zu erhöhen, die Motivation der Mitarbeiter zu steigern, was sich schließlich wiederum in einer erhöhten Effizienz bemerkbar macht.

Diese Vorteile gelten gleichermaßen jeweils für die weiteren beiden Varianten der erfindungsgemäßen Zwischenfördereinrichtung nach den Ansprüchen 30 bzw. 39.

Darüber hinaus ergeben sich weitere Vorteile. So können mit dem erfindungsgemäßen System als auch mit der erfindungsgemäßen Zwischenfördereinrichtung auf Flugplätzen bereits vorhandene, bodengestützte Fördereinrichtungen, mittels derer Stückgut vom Rollfeld in den Bereich der Laderaumöffnung des Flugzeugs gebracht werden kann, weiterhin uneingeschränkt genutzt werden. Eine Außerdienststellung oder gar Verschrottung derselben wird damit vermieden. Dies hilft enorm Kosten einzusparen.

Zudem wird deren Nutzbarkeit mit dem erfindungsgemäßen System bzw. der erfindungsgemäßen Zwischenfördereinrichtung wesentlich erweitert. Dabei geschieht dies im Vergleich zu Lösungen, wie sie beispielsweise die DE 100 07 332 A1 oder die WO 98/54073 vorschlägt, die pro realisierter Anlage leicht EUR 200.000 und mehr kosten können, besonders preiswert. Denn die erfindungsgemäße Zwischenfördereinrichtung verlangt mit einem geschätzten Anschaffungsvolumen von etwa EUR 5.000 und damit 1/40 der vorgenannten Summe keine großen Investitionen. Selbst wenn man bei einer derartigen Wirtschaftlichkeitsbetrachtung davon ausgehen würde, daß die den Boden des Laderaums flächig abdeckende Transporteinrichtung mit in die Kalkulation einzubeziehen ist, und man deren Anschaffungsvolumen auf etwa EUR 35.000 taxieren würde, so ergäben sich Gestehungskosten für das erfindungsgemäße System von etwa EUR 40.000, die gegenüber der vorgenannten Summe immer noch lediglich 1/5 darstellen. Damit ergibt sich gegenüber bekannten Lösungen ein wesentlicher Kostenvorteil.

Darüber hinaus ist das erfindungsgemäße System und die erfindungsgemäße Zwischenfördereinrichtung wesentlich einfacher zu warten, was zu deutlich geringeren Instandhaltungskosten führt. Unabhängig davon sind das erfindungsgemäße System als auch die erfindungsgemäße Zwischenfördereinrichtung einfach in deren Handhabung bzw. Bedienung, so daß damit arbeitendes Personal nicht aufwändig geschult werden muß. Wenn man dann noch berücksichtigt, daß bereits ein kleinerer Flughafen beispielsweise fünf Fördereinrichtungen benötigt, um damit gleichzeitig gerade einmal fünf Flugzeuge abfertigen zu können, was noch kein großes Flugaufkommen darstellt, so ist man bei Lösungen nach dem Grundprinzip der DE 100 07 332 A1 oder der WO 98/54073 schnell bei Investitionsvolumina größer als EUR 1.000.000, denen dann im genannten Beispiel lediglich Investitionen von im schlimmsten Fall EUR 200.000 beim erfindungsgemäßen System gegenüberstünden. Der wirtschaftliche Vorteil ist damit unübersehbar.

Darüber hinaus bietet das erfindungsgemäße System und die erfindungsgemäße Zwischenfördereinrichtung den unschätzbaren Vorteil, daß aufgrund der leichten Handhabbarkeit eine Positionierung der Zwischenfördereinrichtung zur Überbrückung der Distanz vom der Laderaumöffnung zugewandten Ende des äußeren bodengestützten Förderorgans hinein in den Laderaum und damit durch die Laderaumöffnung hindurch ohne jegliche Beschädigungsgefahr des Flugzeugrumpfes oder der Laderaumöffnung geschehen kann, denn das üblicherweise schwer manövrierbare bodengestützte äußere Förderorgan braucht nicht mehr bis in die Laderaumöffnung hinein verfahren zu werden, sondern kann in ausreichendem Sicherheitsabstand zur Laderaumöffnung positioniert werden. Damit ist eine Beschädigung des Flugzeugrumpfes und der Laderaumöffnung ausgeschlossen.

Schlußendlich können mit dem erfindungsgemäßen System und der hierfür vorgesehenen Zwischenfördereinrichtung die Zeit für das Be- und Entladen eines Flugzeugs wesentlich verkürzt und somit die Betriebskosten gesenkt werden.

Vorteilhafte Weiterbildungen der Erfindung ergeben sich aus den Merkmalen der Unteransprüche.

So ist beim erfindungsgemäßen System beispielsweise vorgesehen, daß die Zwischenfördereinrichtung, an deren Unterseite im Überlappungsbereich mit dem äußeren Förderorgan ein Gleitelement, vorzugsweise ein Rad, aufweist. Damit wird eine verschiebliche Abstützung der Zwischenfördereinrichtung auf der Oberseite des äußeren Förderorgans in dessen Endbereich erreicht. Somit kann das im Laderaum des Flugzeugs befindliche Ende der Zwischenfördereinrichtung über die Breite des Laderaums bzw. des Flugzeugrumpfes nach Belieben je nach Bedarf verfahren werden. Dabei genügt in vorteilhafter Weise hierfür bei einer bevorzugten Ausführungsform der Zwischenfördereinrichtung bereits eine Gesamtlänge derselben von etwa 1,50 m. Alternativ könnte die gesamte Länge der Zwischenfördereinrichtung variabel gehalten werden.

Ferner ist in einer bevorzugten Ausführungsform des erfindungsgemäßen Systems vorgesehen, daß an der Zwischenfördereinrichtung im Überlappungsbereich mit dem äußeren Förderorgan ein Ausleger angelenkt ist, der sich mit dessen, von der Zwischenfördereinrichtung wegweisenden Ende vermittels eines dort angelenkten Gelenks gegen eine Gleitschiene abstützt, die parallel zur Längsrichtung des äußeren Förderorgans orientiert und an diesem befestigt ist. Damit wird eine verschiebliche Abstützung der Zwischenfördereinrichtung in Förderrichtung des äußeren Förderorgans erreicht. Somit ergibt sich in vorteilhafter Weise eine Art Zwangsführung der Zwischenfördereinrichtung und damit eine stets. korrekte Ausrichtung des sich auf dem Endbereich des bodengestützten äußeren Förderorgans abstützenden Anfangs der Zwischenfördereinrichtung, so daß beim Betrieb immer sichergestellt ist, daß herangefördertes Stückgut problemlos und fehlerfrei von der äußeren bodengestützten Fördereinrichtung zur Zwischenfördereinrichtung übergeben wird. Gleichzeitig erlaubt diese Art der verschieblichen Abstützung der Zwischenfördereinrichtung eine kräfteschonende und leichte Verschieblichkeit derselben mit einer gleichzeitig sichergestellten einfachen Handhabbarkeit.

Dabei kann bei Bedarf im Bereich des gegen die Gleitschiene sich abstützenden Gelenks erforderlichenfalls zusätzlich eine Bremseinrichtung vorgesehen werden, die eine allzu leichte Verschieblichkeit der Zwischenfördereinrichtung bei Bedarf gezielt hemmen hilft. Ferner könnte zur Arretierung an eine Feststellbremse gedacht werden.

Des weiteren bietet der Ausleger den Vorteile, daß der Anfang der Zwischenfördereinrichtung zwar stets in Förderrichtung des äußeren bodengestützten Förderorgans zwangsgeführt ist, zugleich aber das im Laderaum befindliche Ende der Zwischenfördereinrichtung relativ zu deren Anfang verschwenkt werden kann, so daß die im Laderaum tätige Person die Gesamtausrichtung der Zwischenfördereinrichtung stets auf den laufenden Arbeitsprozeß optimal anpassen kann. Auf diese Weise ist über die gesamte Breite des Laderaums bzw. des Flugzeugrumpfes im Bereich der Ausdehnung der Laderaumöffnung jeder gewünscht Ablagepunkt eines Stückgutes auf der im Laderaum befindlichen, diesen flächig abdeckenden Transporteinrichtung erreichbar.

Entsprechend einer weiter bevorzugten Ausführungsform ist vorgesehen, daß das dem vorderen Ende der Transporteinrichtung im Laderaum zugewandte Ende der Zwischenfördereinrichtung in der Höhe veränderbar ist relativ zum dem äußeren Förderorgan zugewandten Anfang der Zwischenfördereinrichtung. Damit wird in vorteilhafter Weise sichergestellt, daß herangefördertes Stückgut auch in der Höhe im Laderaum jeden Punkt des Laderaumquerschnitts erreichen kann, ohne daß die im Laderaum tätige Person hierfür beispielsweise durch aktives Anheben des Stückgutes irgendwelche Kräfte aufbringen müßte.

In einer weiter bevorzugten Ausführungsform des Systems ist vorgesehen, daß ein Endabschnitt der Zwischenfördereinrichtung derart um eine Achse quer zur Förderrichtung der Zwischenfördereinrichtung verschwenkbar ist, daß dieser Endabschnitt horizontal ausrichtbar ist. Damit wird in vorteilhafter Weise erreicht, daß Stückgut, das auf seiner Förderstrecke schlußendlich an diesem Endabschnitt angekommen ist, zugleich jedenfalls dann derart horizontal ausgerichtet ist, daß es ohne große Mühen direkt von dort auf bereits im Laderaum befindliches Stückgut oder, sofern noch kein Stückgut im Laderaum verstaut sein sollte, direkt auf der im Laderaum befindlichen Transporteinrichtung abgelegt werden kann. Umgekehrt ergibt sich beim Entladen der Vorteil, daß durch die im Laderaum befindliche Transporteinrichtung herangefördertes Stückgut ohne weiteren Kraftaufwand auf den stets horizontal ausgerichteten Endabschnitt der Zwischenfördereinrichtung gezogen und dann mit einer Weiterförderung hinaus aus dem Laderaum zugeführt werden kann.

In einer weiter bevorzugten Ausführungsform des erfindungsgemäßen Systems ist vorgesehen, daß ein Anfangsabschnitt der Zwischenfördereinrichtung mit einem vorbestimmten Neigungswinkel, vorzugsweise zwischen 10° bis 30°, zum Neigungswinkel des äußeren Förderorgans orientiert ist. Mit einem derart sanften rampenähnlichen Übergang vom äußeren bodengestützten Förderorgan zur Zwischenfördereinrichtung ist vorteilhaft sichergestellt, daß Stückgut jeglicher Art problemlose vom äußeren Förderorgan zur Zwischenfördereinrichtung übergeben werden kann. Stauungen oder gar Aussetzer sind in diesem Bereich vermieden. Zugleich ergibt sich mit diesem Neigungswinkel ein guter Kompromiß zwischen einem sanften Übergang von dem äußeren Förderorgan zur Zwischenfördereinrichtung und dem in diesem Bereich für konstruktive Maßnahmen, wie beispielsweise der Anbindung des Auslegers, der Unterbringung beispielsweise eines Elektromotors zum Antrieb der Förderbänder, der Ausbildung eines abstützenden Rahmens zur Anlenkung des vorgenannten Gleitelements oder Stützrades, usw., bereitzustellenden Bauraumes.

Gemäß einer weiter bevorzugten Ausführungsform ist vorgesehen, daß die Zwischenfördereinrichtung mit deren Förderrichtung für die Förderung von Stückgut im wesentlichen quer zur Flugzeuglängsachse um einen Winkelbereich von etwa -30° bis +30° relativ zur Förderrichtung des äußeren Förderorgans verschwenkbar ist. Die Verschwenkbarkeit in einem Bereich von etwa -30° bis +30° gewährleistet in vorteilhafter Weise die gewünschte Förderung des Stückgutes im wesentlichen quer zur Flugzeuglängsachse bzw. in die Tiefe des Laderaums hinein, ohne dabei auf eine angemessene Variation des Endbereich des Zwischenfördereinrichtung in Flugzeuglängsrichtung verzichten zu müssen, so daß damit ein von der Breite der Laderaumöffnung und der Breite des Laderaumquerschnittes aufgespannter Bereich problemlos mit dem Endabschnitt der Zwischenfördereinrichtung erreicht werden kann.

Entsprechend einer weiter bevorzugten Ausführungsform ist vorgesehen, daß Teile der tragenden Struktur der Zwischenfördereinrichtung aus leichten Werkstoffen, wie beispielsweise Aluminium oder Faserverbundwerkstoffen hergestellt sind. Damit ist gewährleistet, daß der ausgehend vom Endabschnitt des äußeren bodengestützten Förderorgans auskragende Teil der Zwischenfördereinrichtung, der je nach Positionierung des Endes der Zwischenfördereinrichtung beim Be- und Entladen von Stückgut im Laderaum mal weiter und mal weniger weit auskragt, immer so leicht gehalten werden kann, daß der gesamte Schwerpunkt der Zwischenfördereinrichtung im Überlappungsbereich mit dem äußeren Förderorgan verbleibt, so daß ein Überkippen des auskragenden Teiles bereits aufgrund der eigenen Gewichtsverteilung ausgeschlossen ist. Dies bietet den zusätzlichen Vorteil, daß im Betrieb und damit im mit Stückgut beladenen Zustand lediglich das zusätzliche Gewicht der geförderten Stückgüter durch den an der Gleitschiene mittels des Gelenks angelenkten Ausleger abzufangen ist, so daß auch dieser relativ leicht bauen kann. Alternativ kann auch ein das äußere bodengestützte Förderorgan umgreifender oder untergreifender Bügel oder dergleichen vorgesehen sein, mit dem ebenfalls ein Verkippen des auskragenden Teils der Zwischenfördereinrichtung ausgeschlossen werden kann. Zugleich bietet die leichte Bauweise der Zwischenfördereinrichtung den Vorteil, daß diese auch aus dem Aspekt des Eigengewichts leicht zu handhaben ist.

Die vorstehend diskutierte Aufgabe wird mit Blick auf die Zwischenfördereinrichtung u.a. in der Weise gelöst, daß eine Zwischenfördereinrichtung zum Be- und Entladen von Stückgut in Laderäumen von Flugzeugen, insbesondere zur Verwendung in einem vorstehend diskutierten System, vorgeschlagen wird, bei der erstmals vorgesehen ist, daß die Zwischenfördereinrichtung wenigstens einen ersten, sich gegen ein äußeres Förderorgan abstützenden Rahmen mit einem ersten Förderorgan, vorzugsweise ein erstes Förderband, aufweist, das beim Beladen Stückgut, vorzugsweise im Bereich Vorderladeraumöffnung des Flugzeugs, vom Flugzeug zugewandten Ende des äußeren Förderorgans entgegennimmt und im wesentlichen quer zur Flugzeuglängsachse weiterfördert. Weiter ist dabei vorgesehen, daß sich an das Ende des ersten Förderorgans ein zweites Förderorgan, vorzugsweise ein zweites Förderband, anschließt, vorzugsweise zur Überbrückung der Distanz am Ende des äußeren Förderorgans ins Innere des Laderaums, das beim Beladen Stückgut, vorzugsweise im Bereich Verladeraumöffnung des Flugzeugs, vom Ende des ersten Förderorgans entgegennimmt und im wesentlichen quer zur Flugzeuglängsachse weiterfördert. Dabei ist weiterhin erstmals vorgesehen, daß sich an dessen Ende ein Drittes Förderorgan, vorzugsweise eine Rollenplatte, anschließt, das beim Beladen Stückgut vom Ende des zweiten Förderorgans entgegennimmt und eine manuelle Drehung des darauf drehbar liegenden Stückgutes derart erlaubt, daß das Stückgut im wesentlichen in Flugzeuglängsrichtung zum vorderen Ende einer im Laderaum vorhandenen Transporteinrichtung dient, weiter beförderbar ist.

Damit ergeben sich wiederum ohne Einschränkungen die bereits vorstehend zum System diskutierten Vorteile.

In einer weiter bevorzugten Ausführungsform der erfindungsgemäßen Zwischenfördereinrichtung ist vorgesehen, daß Stückgut beim Entladen vom vorderen Ende der im Laderaum vorhandenen Transporteinrichtung im wesentlichen in Flugzeuglängsrichtung manuell auf das Dritte Förderorgan aufbringbar ist, dort drehbar gelagert und an das zweite Förderorgan übergebbar abgestützt ist, wobei das zweite Förderorgan das Stückgut im wesentlichen quer zur Flugzeuglängsachse zur Laderaumöffnung und/oder durch diese hindurch fördert und an das erste Förderorgan übergibt, welches das Stückgut im wesentlichen quer zur Flugzeuglängsachse zum äußeren Förderorgan weiter fördert und an dieses zur Weiterförderung übergibt.

Vorteilhafte Weiterbildungen der Zwischenfördereinrichtung ergeben sich aus den Merkmalen der Unteransprüche.

Die vorstehend gestellte Aufgabe wird weiterhin durch eine weitere Variante der erfindungsgemäßen Zwischenfördereinrichtung gemäß Anspruch 39 gelöst. Bei dieser erfindungsgemäßen Zwischenfördereinrichtung zum Be- und Entladen von Stückgut in Laderäumen von Flugzeugen, insbesondere zur Verwendung in einem vorstehend diskutierten System, ist erstmals vorgesehen, daß die Zwischenfördereinrichtung wenigstens einen ersten, sich gegen einen Endabschnitt eines äußeren bodengestützten, von draußen bis in den Laderaum des Flugzeugs hinreichenden Förderorgans abstützenden Rahmen in einem ersten Förderorgan, vorzugsweise ein erstes Förderband, aufweist, das beim Beladen Stückgut vom Endabschnitt des bodengestützten Förderorgans entgegennimmt und weiterfördert. Ferner ist dabei vorgesehen, daß sich an das Ende des ersten Förderorgans ein zweites Förderorgan, vorzugsweise ein zweites Förderband, anschließt, vorzugsweise zur Überbrückung der Distanz vom Endabschnitt des bodengestützten Förderorgans zum Ablageplatz des Stückguts im Laderaum, das beim Beladen Stückgut vom Ende des ersten Förderorgans entgegennimmt und weiterfördert. Schließlich ist ferner erstmals vorgesehen, daß sich an dessen Ende ein Drittes Förderorgan, vorzugsweise eine Rollenplatte, anschließt, das beim Beladen Stückgut vom Ende des zweiten Förderorgans entgegennimmt und eine manuelle Drehung des darauf drehbar liegenden Stückgutes derart erlaubt, daß das Stückgut im wesentlichen in Flugzeuglängsrichtung zum Ablageplatz des Stückgutes im Laderaum weiter förderbar ist.

Gemäß einer bevorzugten Ausführungsform ist vorgesehen, das Stückgut beim Entladen von dessen Ablageplatz im Laderaum, vorzugsweise im wesentlichen in Flugzeuglängsrichtung, manuell auf das dritte Förderorgan aufbringbar ist, dort drehbar gelagert und an das zweite Förderorgan übergebbar abgestützt ist, wobei das zweite Förderorgan das Stückgut weiterfördert und an das erste Förderorgan übergibt, welches das Stückgut zum Endabschnitt des bodengestützten, von außen bis in den Laderaum des Flugzeugs reichenden Förderorgans weiterfördert und an dieses zur Weiterförderung übergibt.

Weitere vorteilhafte Ausgestaltungen sind Gegenstand der Unteransprüche.

Damit lassen sich in vorteilhafter Weise die vorstehend zu den bereits diskutierten Varianten des Systems als auch der Zwischenfördereinrichtung aufgeführten Vorteile auch mittels dem erfindungsgemäßen System bzw. der erfindungsgemäßen Zwischenfördereinrichtung auf äußere bodengestützte Förderorgane oder dergleichen übertragen, die bis in den Laderaum hinein reichen und beispielsweise dem in der DE 100 07 332 A1 oder der WO 98/54073 A1 oder der WO 01/51356 A1 beschriebenen Prinzip im wesentlichen entsprechen.

Die vorstehend gestellte Aufgabe wird dementsprechend durch eine weitere Variante einer erfindungsgemäßen Fördereinheit gemäß Anspruch 50 gelöst.

Bei dieser Variante der erfindungsgemäßen Fördereinheit zum Be- und Entladen von Stückgut, wie insbesondere Gepäckstücke oder dergleichen in einem Laderaum eines Flugzeugs, ist zum Transport des Stückguts dieses von außerhalb des Flugzeugs von der Rollfeldebene an die Laderaumöffnung heran und durch diese hindurch bis in den Laderaum hinein weiter förderbar. Die Fördereinheit weist zum Transport des Stückgutes im Laderaum ein erstes Förderorgan auf. Mit dem ersten Förderorgan ist von außerhalb des Flugzeugs herangeführtes Stückgut beim Beladen des Laderaums im Laderaum sowohl quer als auch längs zur Flugzeuglängsachse in den Flugzeugrumpf hinein bis in den Bereich eines Ablegeplatzes förderbar. Mit dem ersten Förderorgan ist beim Entladen Stückgut aus dem Bereich des Ablegeplatzes bis in die Ebene der Laderaumöffnung zurück förderbar, so daß das Stückgut von dort quer zur Flugzeuglängsachse durch die Laderaumöffnung hindurch nach draußen weg förderbar ist.

Hierbei wird erstmals vorgeschlagen, daß das im Flugzeugrumpf im Laderaum befindliche Ende des ersten Förderorgans quer zur Flugzeuglängsachse horizontal verschieblich oder verschwenkbar ist und ein sich daran anschließendes zweites Förderorgan mit einem sich daran anschließenden dritten Förderorgan aufweist. Hierbei ist für eine Höhenverstellung des dritten Förderorgans im Laderaum durch eine Neigungsverstellung des zweiten Förderorgans erzielbar. Ferner ist das Stückgut im Laderaum beim Beladen - durch Fördermittel des dritten Förderorgans kraftunterstützt oder selbsttätig - durch das dritte Förderorgan gezielt auf dem gewünschten Ablageplatz ablegbar und beim Entladen - durch Fördermittel des dritten Förderorgans kraftunterstützt oder selbsttätig - von dort gezielt heranholbar bzw. aufnehmbar und wegförderbar.

Damit kann in besonders vorteilhafter Weise die im Laderaum befindliche Person, die mit dem Be- und Entladen des Flugzeugladeraums beauftragt ist, im Falle des Beladens Stückgut, das am im Laderaum befindlichen Ende des ersten Förderorgans von draußen heran gefördert ankommt, über das zweite und das dritte Förderorgan ohne Einsatz der eigenen Muskelkraft bis zum gewünschten Ablageplatz weiterbefördern und dort kraftunterstützt oder selbsttätig ohne nennenswerte eigene Kraftanstrengung auf dem dafür vorgesehenen Ablageplatz vom dritten Förderorgan ablegen lassen. Dementsprechend kann diese Person beim Entladen des Laderaums Stückgut von dessen Ablageplatz kraftunterstützt oder selbsttätig ohne nennenswerte Kraftanstrengung mit dem dritten Förderorgan heranholen bzw. aufnehmen, vom dritten Förderorgan an das zweite Förderorgan übergeben und vom ersten Förderorgan Richtung Laderaumöffnung weg transportieren lassen, so daß es von dort weiter durch die Laderaumöffnung hindurch nach draußen Richtung Rollfeld gefördert werden kann.

Diese Person braucht somit die Stückgüter bzw. Gepäckstücke beispielsweise im häufig recht engen, sogenannten "narrow boddy" Laderaum eines Flugzeugs nicht mehr in kniender oder gebückter Haltung mit einer Drehbewegung aus den Lenden heraus über die Schulter heben, was zu einer dauerhaften Schädigung des Rückgrates führen würde. Die erfindungsgemäße Fördereinheit führt damit in vorteilhafter Weise zu einer Entlastung des Rückens dieser Person und somit zu einer Vermeidung einer Gefährdung deren Gesundheit. Hierbei ist mit dem erfindungsgemäßen System bzw. der Fördereinheit jeder Punkt bzw. Platz im Laderaum gezielt erreichbar, so daß der gesamte Stauraum bzw. die volle Nutzlastkapazität des Laderaums eines Flugzeugs ausgenutzt werden können.

Die bereits vorstehend zum System oder zur Zwischenfördereinrichtung diskutierten Vorteile sind in analoger Weise auch mit der hier diskutierten Fördereinheit erzielbar.

Umgekehrt sind die hier zur erfindungsgemäßen Fördereinheit diskutierten Vorteile hinsichtlich der mit dem dortigen dritten Förderorgan realisierbaren kraftunterstützten oder selbsttätigen Ablage von Stückgut auf dem gewünschten Ablageplatz beim Beladen oder Aufnahme von Stückgut beim Entladen gleichermaßen mit den vorstehend bereits diskutierten erfindungsgemäßen Systemen und Zwischenfördereinrichtungen in analoger Weise mit dem jeweils entsprechenden letzten Förderorgan erzielbar.

Vorteilhafte Weiterbildungen dieser Variante des Systems als auch der entsprechenden Variante einer Fördereinheit ergeben sich aus den Merkmalen der jeweiligen Unteransprüche.

So sind beispielsweise Einrichtungen oder Elemente zur Unterstützung der Hub-, Senk- oder Schwenk-Bewegung des zweiten und/oder des dritten Förderorgans vorgesehen. Dies können beispielsweise ein beiderseits der Ränder eines Förderorgans angeordneter kraftbetätigter Parallelogramm-Lenker, ein Federspeicherzylinder, elektrisch betriebene Stellglieder oder dergleichen Bauteile sein. Damit läßt sich die erforderliche Positionsveränderung für wechselnde Ablageplätze von Stückgut durch die im Laderaum tätige Person je nach Ausführungsform näherungsweise kraftfrei bis automatisch kraftbetätigt vorgeben.

Ferner ist ein Multifunktions-Bedienelement vorgesehen, mit dem beispielsweise die horizontale Ausrichtung des dritten Förderorgans, die Neigung des zweiten Förderorgans, die Positionierung des ersten Förderorgans im Laderaum, die Förderrichtung, die Fördergeschwindigkeit oder weitere Funktionen steuerbar sind. Die im Laderaum tätige Person kann durch Betätigung des Multifunktions-Bedienelements die Fördereinheit dazu veranlassen, ein bestimmtes Stückgut bzw. Gepäckstück beim Beladen gezielt an einem bestimmten Platz abzulegen oder beim Entladen von einem ausgewählten Platz aufzunehmen.

Eine besonders bevorzugte Ausführungsform der erfindungsgemäßen Fördereinheit weist ein drittes Förderorgan auf, das über Fördermittel verfügt, die als Förderband bzw. Fördergurt ausgebildet sind. Das Förderband verläuft dabei über eine darunter angeordnete steife Gleitplatte. Damit ist sichergestellt, daß das als Förderband ausgebildete Fördermittel eine ausreichend hohe flächige Steifigkeit aufweist, so daß ein Durchhängen des Förderbandes selbst bei kleinen und zugleich schweren Gepäckstücken ausgeschlossen ist. Ferner ist dabei vorgesehen, daß eine dem Stückgut zugewandte Umlenkrolle des Förderbandes einen derart kleinen Durchmesser aufweist, daß die damit ausgebildete Spitze des dritten Förderorgans bzw. dieses selbst im Längsschnitt betrachtet spatel- oder zungenartig ausgebildet ist. Auf diese Weise kann das dritte Förderorgan gegebenenfalls zwischen zwei aufeinander liegende Gepäckstücke zumindest teilweise hinein geschoben werden, so daß dann das auf dem Förderband aufliegende obere Gepäckstück vom Förderband aufgezogen und mitgenommen werden kann. In gleicher Weise kann beim Beladen ein Gepäckstück bzw. Stückgut selbst noch knapp unter der Oberkante bzw. Decke des Laderaums auf die oberste Schicht eines Stückgutstapels aufgelegt werden, da das dritte Förderorgan für sich selbst kaum Platz in der Höhe in Anspruch nimmt. Damit ist der im Laderaum verfügbare Stauraum auch in der Höhe soweit als möglich ausnutzbar. Die im Längsschnitt betrachtete spatel- bzw. zungenartige Ausgestaltung des dritten Förderorgans ermöglicht auch eine besonders nahe Absenkung desselben an den Boden des Laderaums, so daß auch beispielsweise flache Gepäckstücke, die direkt auf dem Laderaumboden aufliegen vom dritten Förderorgan selbsttätig aufgenommen werden können, in dem die Spitze des dritten Förderorgans unter das auf dem Laderaumboden liegende Stückgut geschoben wird und bei rückläufigem Förderband das Stückgut auf das Förderband aufgezogen wird. Je nach Ausführungsform der Fördereinheit kann sich dabei das dritte Förderorgan selbsttätig entsprechend der Vorgaben des Bedienpersonals am Multifunktions-Bedienelement oder sogar automatisch in Abhängigkeit der Befehle von den Regelsystemen in den Stückgutstapel hinein bewegen, um von dort beim Entladen Gepäckstücke aufzunehmen oder beim Beladen zum Stückgutstapel zu einer bestimmten Position hinbewegen, um dort Stückgut gezielt abzulegen. Erforderlichenfalls kann die im Laderaum tätige Person bei auftretenden Problemen eingreifen und gegebenenfalls von Hand nachhelfen.

In einer besonders bevorzugten Ausführungsform des Förderbandes beträgt der Reibungskoeffizient µ zwischen wenigstens einem Teil des Stückguts und wenigstens einem Teil der dem Stückgut zugewandten Oberfläche des Förderbands über 0,50. In einer besonders bevorzugten Variante beträgt der Reibungskoeffizient µ über 0,60 und ganz besonders bevorzugt über 0,70. Damit ist sichergestellt, daß selbst Gepäckstücke mit besonders glatter Oberflächenbeschaffenheit, wie beispielsweise Hartschalenkoffer, Metallkoffer, Alukisten, glatte Segeltuchtaschen oder dergleichen genau so gut wie Gepäckstücke mit wesentlich griffigerer Oberfläche, wie beispielsweise herkömmliche Lederkoffer, Ledertaschen, Weichschalenkoffer, Stoffsäcke oder sonstige Gepäckstücke aus Leinen, Leder oder weichen Kunststoffen oder dergleichen problemlos vom Förderband des dritten Förderorgans aufgenommen werden können, selbst wenn diese hierfür vom dritten Förderorgan erst aus einem ungeordneten Stapel von übereinander liegenden Gepäckstücken heran-, heraus- oder heruntergezogen werden müßten. Damit ist ferner sichergestellt, daß beim Beladen derlei Stückgüter problemlos vom dritten Förderorgan auf bereits vorhandene Stückgüter aufgelegt werden können, selbst wenn dabei das aufzulegende Stückgut vom dritten Förderorgan über das bereits abgelegte Stückgut unter entsprechender Überwindung der zwischen diesen beiden Stückgütern herrschenden Reibungskräfte an- bzw. darüber hinweg verschoben werden müßte. Mit Reibungsbeiwerten von 0,40 bis 0,80 und bevorzugt zwischen 0,50 bis 0,75 zwischen dem Stückgut und dem Förderband ist bei den vorgenannten Materialien für Stückgut bzw. Gepäckstücke und einer entsprechenden Beschaffenheit der dem Stückgut zugewandten Oberfläche des Förderbandes regelmäßig ein problemloses Fördern bzw. Verschieben desselben sichergestellt.

In einer bevorzugten Variante ist weiterhin vorgesehen, daß das Förderband an dessen dem Stückgut zugewandter Oberfläche die Reibung erhöhende Mittel, wie insbesondere Aufrauhungen, Noppen, Rippen, Stege, Grannen, aufgesetzte Schaum- oder Moosgummteile oder dergleichen aufweist. Derlei reibungserhöhende Mittel können auch dadurch bereit gestellt werden, daß das Förderband mehrschichtig aufgebaut wird. Die Beschaffenheit einer mittleren Schicht kann dabei so gewählt werden, daß mit dem Förderband die im Förderband auftretenden Längs- und ggf. Querkräfte problemlos bewältigt werden können. Eine nach innen zu den Umlenk- oder Antriebsrollen hin weisende Schicht wird so gewählt, daß ein optimales Antreiben des Förderbandes gewährleistet ist. Eine nach außen zu den Gepäckstücken hin weisende Schicht kann abschnittsweise oder vollständig mit entsprechenden reibungserhöhenden Beschichtungen oder dergleichen ausgestattet sein.

Mit derlei reibungserhöhenden Mitteln soll sichergestellt werden, daß Stückgut in jeder Lage aus einem Stapel möglicherweise wirr übereinander gestapelter Stückgüter herausgezogen oder ein zu oberst aufliegendes Stückgut von einem solchen Stapel heruntergezogen und mit dem Förderband des dritten Förderorgans von diesem aufgenommen und an das zweite Förderorgan weiter gegeben werden kann. Bevorzugte Materialien für die Beschichtung zumindest von Teilen der nach außen gewandten Oberfläche des Förderbandes sind beispielsweise verschiedene Gummiarten, Moosgummiauflagen, weiche bzw. haftende Kunststoffbeschichtungen oder Kunststoffauflagen, oder dergleichen. Alternativ ist es denkbar, die Rauhigkeit der nach außen weisenden Oberfläche des Förderbandes zu erhöhen.

Alternativ zum bevorzugt als Förderband ausgebildeten Fördermittel des dritten Förderorgans oder auch ergänzend hierzu kann das dritte Förderorgan als Fördermittel einen beweglichen Schieber, eine schräg anstellbare, einen Greifer oder dergleichen Aktuatoren aufweisen, wie dies bereits zu den vorstehend beschriebenen Varianten erfindungsgemäßer Systeme oder Zwischenfördereinrichtungen diskutiert worden ist. Damit sind weitere unterschiedliche Ausführungsformen des dritten Förderorgans ausbildbar, die alle dazu dienen sollen, daß die im Laderaum befindliche Person selbst im Idealfall keine Kräfte auf das zu fördernde Stückgut auszuüben braucht, sondern daß diese Kräfte von vorgenannten Fördermitteln bzw. Betätigungselementen, die dem dritten Förderorgan zugeordnet sind, aufgebracht werden. Mit derlei Betätigungselementen kann Stückgut - die Kräfte der Bedienperson schonend und damit deren Gesundheit schützend - auf dem gewünschten Ablageplatz abgelegt oder von dort aufgenommen werden. Der zum Förderband des dritten Förderorgans ergänzende bzw. unterstützende oder gar dieses ersetzende Einsatz von Schiebern, Greifern oder dergleichen Fördermitteln ist bei der hier diskutierten Variante einer Fördereinheit mit Blick auf die beim dritten Förderorgan zur Bewegungsrichtung des Fördermittels im wesentlichen gleich laufende Bewegungsrichtung des zu fördernden Stückguts mit zusätzlichen baulichem Aufwand verbunden, um sicherstellen zu können, daß die eingesetzten Fördermittel den Bewegungsfreiraum des zu fördernden Stückgutes nicht unakzeptabel beschränken oder gar behindern. Der hierzu erforderliche bauliche Anpassungsaufwand kann sich je nach Anwendungsfall gerade bei vollautomatisch arbeitenden Fördereinheiten aufgrund eines damit erzielbaren erhöhten Stückgutdurchsatzes, einer verbesserten Fehlertoleranz bzw. einer erhöhten Zuverlässigkeit lohnen.

In einer weiter bevorzugten Variante ist vorgesehen, daß mit dem im Laderaum befindlichen Ende des ersten Förderorgans und/oder mit dem zweiten Förderorgan und/oder mit dem dritten Förderorgan kommunizierende automatische Regelsysteme vorhanden sind, die beispielsweise Sensoren, Kameras, Regelkreise, künstliche Intelligenz, Aktuatoren, Stellmotoren oder dergleichen aufweisen können. Auf diese Weise kann ein sich selbst regelndes, automatisch arbeitendes, ggf. auch lernfähiges und sich damit selbst optimierendes System bzw. eine derart automatisch arbeitende Fördereinheit geschaffen werden, so daß auf Personen im Laderaum gänzlich verzichtet werden kann. Damit ist eine Gefährdung dieser Personen vollständig ausgeschlossen. Nicht zuletzt lassen sich mit einem derart automatisierten System oder einer derart automatisierten Fördereinheit wesentlich höhere Durchsatzraten beim Be- und Entladen von Flugzeugen erreichen. Schließlich können die Daten der Regelsysteme protokolliert und abgefragt werden, so daß deren einwandfreies Funktionieren erforderlichenfalls überwacht und nachgewiesen werden kann, oder nicht gänzlich auszuschließender Wartungsbedarf frühzeitig festgestellt und eine gezielte Wartung vorgenommen werden kann.

Mit der vorstehend diskutierten Variante der erfindungsgemäßen Fördereinheit kann in vorteilhafter Weise eine im Laderaum befindliche Person gänzlich darauf verzichten, Stückgut vom im Laderaum befindlichen Ende der Fördereinheit manuell mit zum Teil erheblichen Kraftanstrengungen auf dem dafür vorgesehenen Ablageplatz abzulegen oder beim Entladen von dort wegzunehmen und auf das vordere Ende des Förderorgans zu verbringen. Damit ist eine vollständige Entlastung dieser Person möglich. Beim Be- und Entladen des Laderaums ist z.B. auch bei "narrow-body" Flugzeugen trotz der dort vorherrschenden beengten Platzverhältnisse keine Gesundheitsgefährdung des damit beschäftigen Personals zu befürchten. Darüber hinaus bietet die vollautomatische Variante einer erfindungsgemäßen Fördereinheit die Möglichkeit, gänzlich auf Personal beim Be- und Entladen im Laderaum zu verzichten, so daß eine diesbezügliche Gesundheitsgefährdung grundsätzlich ausgeschlossen bleibt, dementsprechend die Kosten beim Be- und Entladen gesenkt werden können, und dieses Personal letztendlich an einer anderen Stelle für andere Aufgaben zur Verfügung steht.

Die Erfindung wird nachfolgend in Ausführungsbeispielen anhand der Figuren der Zeichnung näher erläutert. Es zeigt:
- Fig. 1: einen schematisch vereinfachten Schnitt als auch eine schematisch vereinfachte Draufsicht eines Laderaums in einem Flugzeug mit einer darin angeordneten beispielhaften Ausführungsform einer erfindungsgemäßen Zwischenfördereinrichtung beim Beladen, die am Rollfeld-Förderorgan angelenkt ist;
- Fig. 2: einen schematisch vereinfachten Schnitt als auch eine schematisch vereinfachte Draufsicht der in Fig. 1 gezeigten Zwischenfördereinrichtung, die am Rollfeld-Förderorgan angelenkt ist, mit einer zweiten Variante des zweiten Förderorgans beim Beladen mit teilweise ausgefahrenem zweiten Förderorgan;
- Fig. 3: einen schematisch vereinfachten Schnitt als auch eine schematisch vereinfachte Draufsicht der in Fig. 1 und 2 gezeigten Zwischenfördereinrichtung beim Beladen mit bei der in Fig.1 gezeigten ersten Variante des zweiten Förderorgans in dessen Längsrichtung verlängter Länge;
- Fig. 4: einen schematisch vereinfachten Schnitt als auch eine schematisch vereinfachte Draufsicht einer zweiten Variante einer Zwischenfördereinrichtung beim Beladen mit einem einen Schieber aufweisenden zweiten Förderorgan;

- Fig. 5: einen schematisch vereinfachten Schnitt als auch eine schematisch vereinfachte Draufsicht einer in Fig. 1 bis 3 gezeigten Zwischenfördereinrichtung beim Beladen mit Stückgut;
- Fig. 6: einen schematisch vereinfachten Schnitt als auch eine schematisch vereinfachte Draufsicht einer in Fig. 1 bis 3 gezeigten Zwischenfördereinrichtung beim Beladen mit darunter angeordneter Auffangschale (kurz: DWU);
- Fig.7: einen schematisch vereinfachten Schnitt als auch eine schematisch vereinfachte Draufsicht der in Fig. 2 gezeigten zweiten Variante einer Zwischenfördereinrichtung beim Beladen mit darunter angeordneter Auffangschale (kurz: DWU);
- Fig. 8: einen schematisch vereinfachten Schnitt als auch eine schematisch vereinfachte Draufsicht einer dritten Variante einer Zwischenfördereinrichtung beim Beladen mit darunter angeordneter Auffangschale (kurz: DWU);
- Fig. 9: einen schematisch vereinfachten Schnitt als auch eine schematisch vereinfachte Draufsicht einer vierten Variante einer Zwischenfördereinrichtung beim Beladen mit darunter angeordneter Auffangschale (kurz: DWU);
- Fig. 10: einen schematisch vereinfachten Schnitt als auch eine schematisch vereinfachte Draufsicht einer fünften Variante einer Zwischenfördereinrichtung beim Entladen ohne darunter angeordneter Auffangschale (kurz: DWU);

- Fig. 11: einen schematisch vereinfachten Schnitt als auch eine schematisch vereinfachte Draufsicht der in Fig. 2 gezeigten zweiten Variante einer in Fig. 1 gezeigten Zwischenfördereinrichtung beim Entladen ohne darunter angeordneter Auffangschale (kurz: DWU);
- Fig. 12: einen schematisch vereinfachten Schnitt als auch eine schematisch vereinfachte Draufsicht eine vereinfachte Variante einer Zwischenfördereinrichtung ohne zweites Förderorgan beim Entladen ohne darunter angeordneter Auffangschale (kurz: DWU);
- Fig. 13: einen schematisch vereinfachten Schnitt als auch eine schematisch vereinfachte Draufsicht der in Fig. 12 gezeigten vereinfachten Variante einer Zwischenfördereinrichtung beim Entladen mit separatem Greifer und mit darunter angeordneter Auffangschale (kurz: DWU);
- Fig. 14: einen schematisch vereinfachten Schnitt als auch eine schematisch vereinfachte Draufsicht der in Fig, 12 gezeigten vereinfachten Variante einer Zwischenfördereinrichtung beim Entladen mit integriertem Greifer und mit darunter angeordneter Auffangschale (kurz: DWU);
- Fig. 15: einen schematisch vereinfachten Schnitt als auch eine schematisch vereinfachte Draufsicht einer sechste Variante einer Zwischenfördereinrichtung beim Entladen mit darunter angeordneter Auffangschale (kurz: DWU);
- Fig. 16: einen schematisch vereinfachten Schnitt als auch eine schematisch vereinfachte Draufsicht die in Fig. 12 gezeigte vereinfachte Variante einer Zwischenfördereinrichtung beim Entladen mit separatem Schieber und mit darunter angeordneter Auffangschale (kurz: DWU);
- Fig. 17: eine schematische vereinfachte seitliche Ansicht einer alternativen Ausführungsform des erfindungsgemäßen Systems als auch einer alternativen Ausführungsform der erfindungsgemäßen Zwischenfördereinrichtung, beim Beladen;
- Fig. 18: die in Fig. 17 gezeigte alternative Ausführungsform des Systems als auch der Zwischenfördereinrichtung, beim Entladen;
- Fig. 19: eine schematisch vereinfachte vergrößerte Seitenansicht der in Fig. 17 und 18 gezeigten Variante;
- Fig. 20: eine schematisch vereinfachte Draufsicht auf die in Fig. 17 bis Fig. 19 gezeigte Variante;
- Fig. 21: eine schematisch vereinfachte vergrößerte Teildraufsicht auf die in Fig. 17 bis 20 gezeigte Variante;
- Fig. 22: eine schematisch vereinfachte Seitenansicht des im Laderaum befindlichen Endes einer weiteren Variante einer Fördereinheit mit Multifunktions-Bedienelement;
- Fig. 23: eine schematisch vereinfachte Seitenansicht des im Laderaum befindlichen Endes einer weiteren Variante einer Fördereinheit mit automatischem Regelsystem;

- Fig. 24: eine schematisch vereinfachte Draufsicht auf das im Laderaum befindlichen Ende der in Fig. 22 gezeigten Variante einer Fördereinheit mit Multifunktions-Bedienelement; und
- Fig. 25: eine schematisch vereinfachte Draufsicht auf das im Laderaum befindlichen Ende der in Fig. 23 gezeigten Variante einer Fördereinheit mit automatischem Regelsystem.

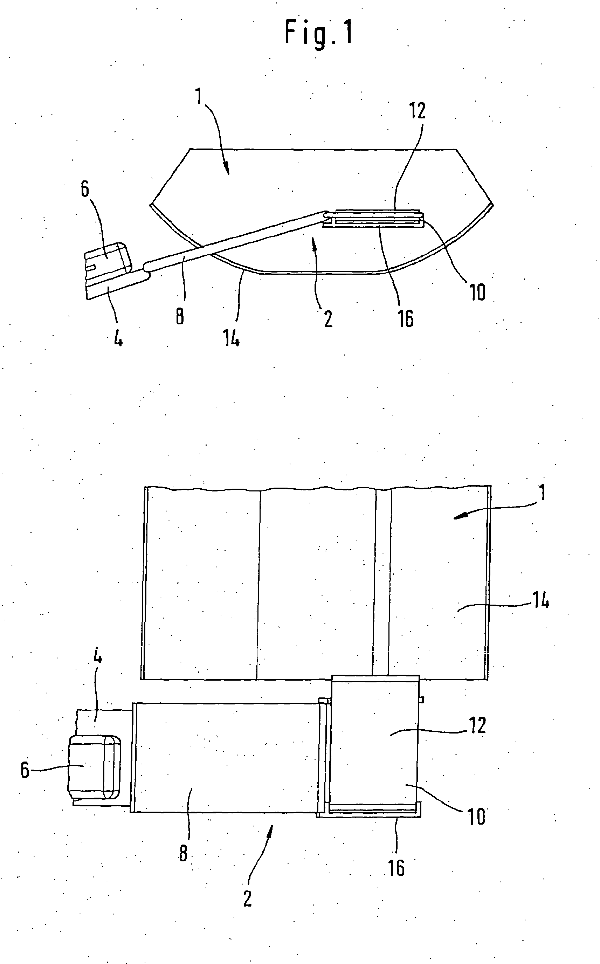

In Fig. 1 ist in einem schematisch vereinfachten Schnitt als auch in einer schematisch vereinfachten Draufsicht ein Laderaum 1 eines nicht näher dargestellten Flugzeuges mit einer darin angeordneten ersten beispielhaften Ausführungsform einer erfindungsgemäßen Zwischenfördereinrichtung 2 beim Beladen gezeigt. Die Zwischenfördereinrichtung 2 ist an einem Rollfeld-Förderorgan 4, das nur zum Teil angeschnitten dargestellt ist und ein angeschnittenes Stückgut 6 fördert, angelenkt. Das Rollfeld-Förderorgan, kann wie vorstehend diskutiert, auf dem Rollfeld verfahren werden.

Die Zwischenfördereinrichtung 2 weist in Fig. 1 ein erstes Förderorgan 8 auf, das vom Rollfeld-Förderorgan 4 durch die Laderaumöffnung hindurch bis in den Laderaum 1 hinein reicht, wobei das erste Förderorgan 8 hier beispielsweise als Förderband ausgebildet ist, sowie ein zweites Förderorgan 10. Das zweite Förderorgan 10 verfügt über einen beispielsweise als Förderband ausgebildeten, in dessen Längsrichtung und damit in Längsrichtung des Flugzeuges längenveränderbaren Förderabschnitt 12, der bei dieser Darstellung bis zum, der hier nicht näher dargestellten Laderaumöffnung zugewandten, vorderen Ende einer den nicht näher dargestellten Boden des Laderaumes 1 auskleidenden Transporteinrichtung 14 reicht, wobei die Transporteinrichtung 14 beispielsweise als Transportteppich ausgebildet sein kann.

Das zweite Förderorgan 10 ist am ersten Förderorgan 8 angelenkt und kann gegenüber diesem verschwenkt werden. Das zweite Förderorgan 10 verfügt über eine gestell- oder rahmenartige Struktur 16, vermittels der der längenveränderliche Förderabschnitt 12 abgestützt ist. Das Stückgut 6 wird vom Rollfeld-Förderorgan 4 zum ersten Förderorgan 8 der Zwischenfördereinrichtung 2 transportiert und von dort zum zweiten Förderorgan 10 weitertransportiert, so daß es quer zur Flugzeuglängsachse weiter in den Laderaum 1 hineingelangt und dann in Längsrichtung des Laderaumes 1 vom zweiten Förderorgan 10 zur Transporteinrichtung 14 übergeben werden kann, so daß es von dort aus weiter in die Tiefe des Laderaumes 1 transportierbar ist.

Im weiteren Verlauf der Figurenbeschreibung werden gleich- oder ähnlich wirkende Teile bzw. Elemente mit den selben Bezugszeichen wie in der ersten Ausführungsform versehen.

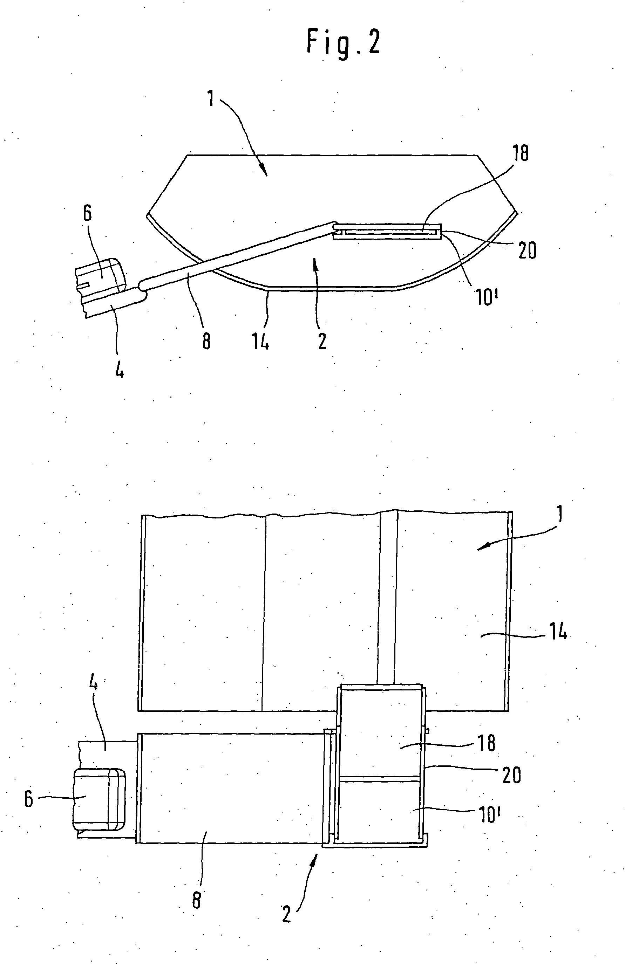

In Fig. 2 ist in einem schematisch vereinfachten Schnitt als auch in einer schematisch vereinfachten Draufsicht die in Fig. 1 gezeigte Zwischenfördereinrichtung 2 mit einer zweiten Variante des zweiten Förderorgans 10' beim Beladen mit teilweise ausgefahrenem zweiten Förderorgan 10' dargestellt. Das zweite Förderorgan 10' weist eine in Längsrichtung des Förderorgans 10' verschiebliche Platte 18 auf, die in einer schienenartigen Führungsstruktur 20 geführt ist und bei der hier gezeigten Darstellung soweit in Flugzeuglängsrichtung ausgefahren ist, daß sie bis über das vordere Ende der bodenseitigen Transporteinrichtung 14 reicht. Damit ist sichergestellt, daß Stückgut 6 von der Zwischenfördereinrichtung 2 lückenlos an die Transporteinrichtung 14 übergeben werden kann.

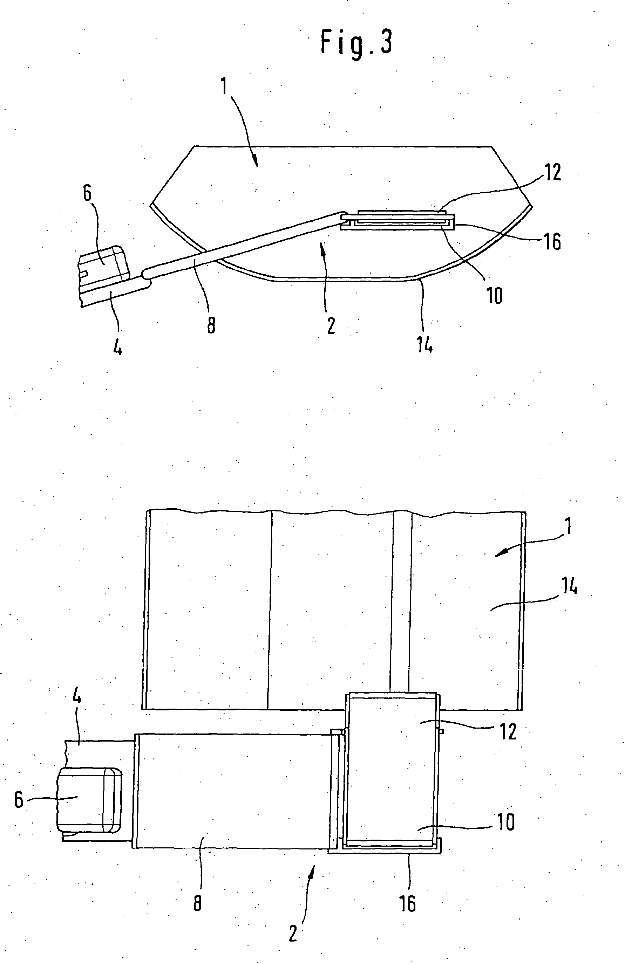

In Fig. 3 ist in einem schematisch vereinfachten Schnitt als auch in einer schematisch vereinfachten Draufsicht die in Fig. 1 und 2 gezeigte Zwischenfördereinrichtung 2 mit der bereits in Fig. 1 gezeigten ersten Variante des zweiten Förderorgans 10 dargestellt. Das zweite Förderorgan 10 weist eine in dessen Längsrichtung vergrößerte Länge des Förderabschnittes 12 auf, so daß dessen, in den Laderaum 1 in Längsrichtung hineinragendes Ende weiter über die Transporteinrichtung 14 ragt, wie in Fig. 1 veranschaulicht. Auch auf diese Weise kann sichergestellt werden, daß Stückgut von der Zwischenfördereinrichtung 2 zweifelsfrei bis zur Transporteinrichtung 14 gelangt.

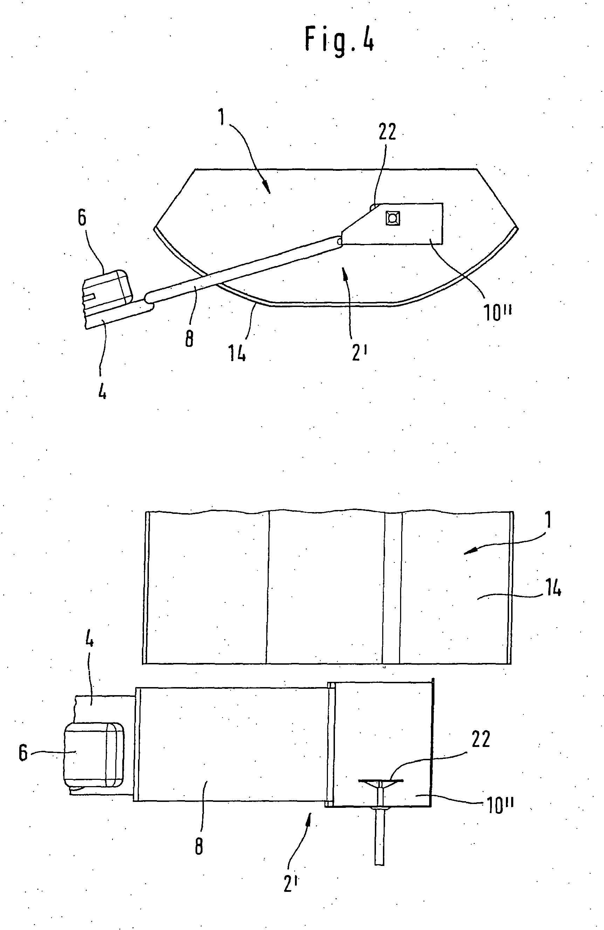

In Fig. 4 ist in einem schematisch vereinfachten Schnitt und in einer schematisch vereinfachten Draufsicht eine zweite Variante einer Zwischenfördereinrichtung 2' beim Beladen gezeigt. Die zweite Variante der Zwischenfördereinrichtung 2' verfügt über eine weitere Variante des zweiten Förderorgans 10", das seinerseits einen Schieber 22 aufweist. Vermittels des Schiebers 22 wird Stückgut 6 in Längsrichtung des Flugzeuges in den Laderaum 1 hinein auf die dortige Transporteinrichtung 14 geschoben.

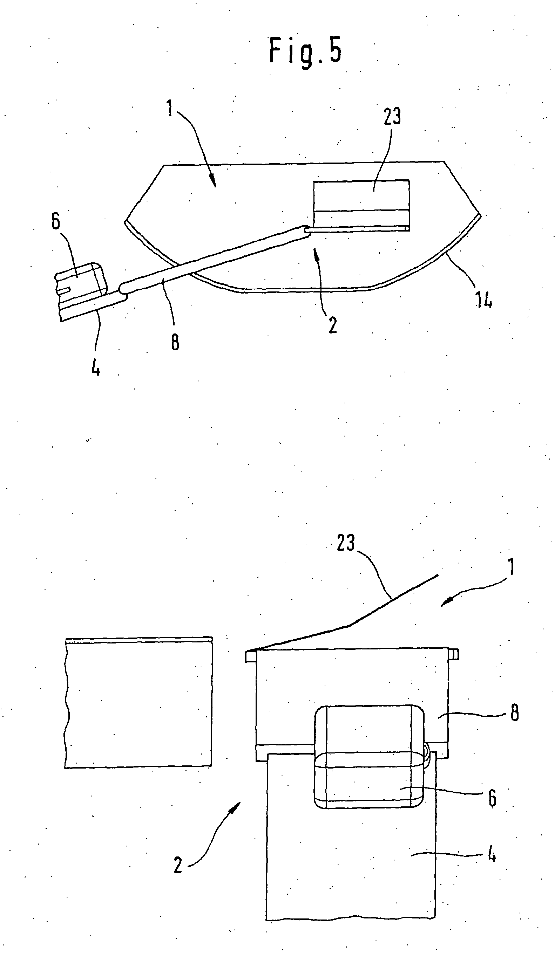

In Fig. 5 ist in einem schematisch vereinfachten Schnitt als auch in einer schematisch vereinfachten Draufsicht eine verallgemeinerte Darstellung der in Fig. 1 bis 3 gezeigten Zwischenfördereinrichtung 2 beim Beladen mit Stückgut 6 veranschaulicht. Stückgut 6 wird vom ersten Förderorgan 8 der Zwischenfördereinrichtung 2 an das zweite Förderorgan 10 übergeben, wobei dieses eine Platte 23 aufweist; die an einem Ende angehoben werden kann, so daß das Stückgut 6 wie über eine schiefe Ebene von der Platte 23 herunter - in der in Fig. 5 unten wiedergegebenen Darstellung nach links - auf die Transporteinrichtung 14 rutschen kann.

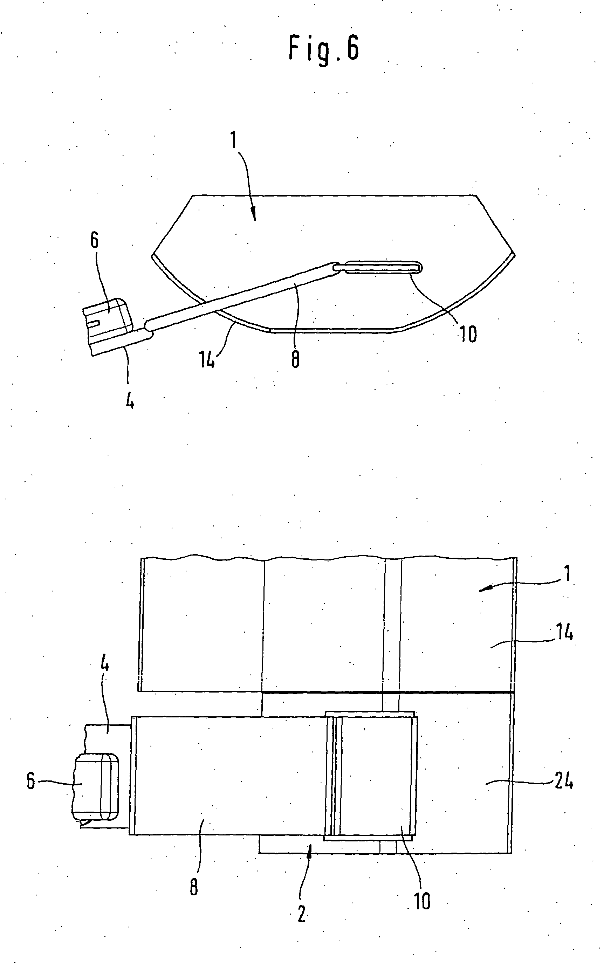

In Fig. 1 bis 5 wird der dort gezeigte Beladevorgang ohne eine im näheren Umfeld der nicht näher dargestellten Laderaumöffnung angeordneten Auffangschale durchgeführt. Diese Auffangschale wird eingedeutscht häufig auch als "Door-Way-Unit" (kurz: DWU) bezeichnet. Eine Variante einer solchen Auffangschale ist in den Fig. 6 bis 9 und Fig. 13 bis 16 gezeigt und ist dort mit der Bezugsziffer 24 versehen.

Dabei ist in Fig. 6 in einem schematisch vereinfachten Schnitt als auch einer schematisch vereinfachten Draufsicht die bereits in Fig. 3 gezeigte Zwischenfördereinrichtung 2 beim Beladen mit darunter angeordneter Auffangschale 24 (kurz: DWU) veranschaulicht. Dabei grenzt die DWU 24 an die Transporteinrichtung 14 an und sichert den Raum im Nahbereich der hier nicht näher dargestellten Laderaumöffnung unter der Zwischenfördereinrichtung 2 ab, so daß eventuell von der Zwischenfördereinrichtung 2 versehentlich herunterrutschendes Stückgut 6 aufgefangen und an die Transporteinrichtung 14 übergeben wird.

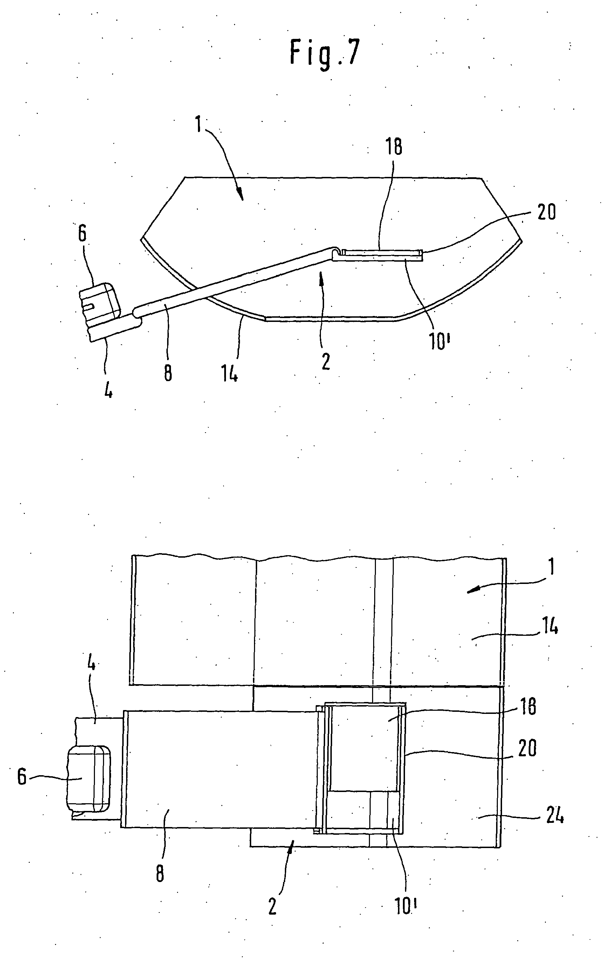

In Fig. 7 ist in einem schematisch vereinfachten Schnitt als auch in einer schematisch vereinfachten Draufsicht die bereits in Fig. 2 gezeigte zweite Variante einer Zwischenfördereinrichtung 2 mit der dort bereits dargestellten Variante des zweiten Förderorgans 10' beim Beladen mit darunter angeordneter Auffangschale 24 dargestellt.

Wie bereits vorstehend erwähnt, sind nachfolgend ähnlich wirkende Teile bzw. Elemente der weiter diskutierten Varianten mit gleichen Bezugszeichen wie in den vorausgegangenen Figuren versehen.

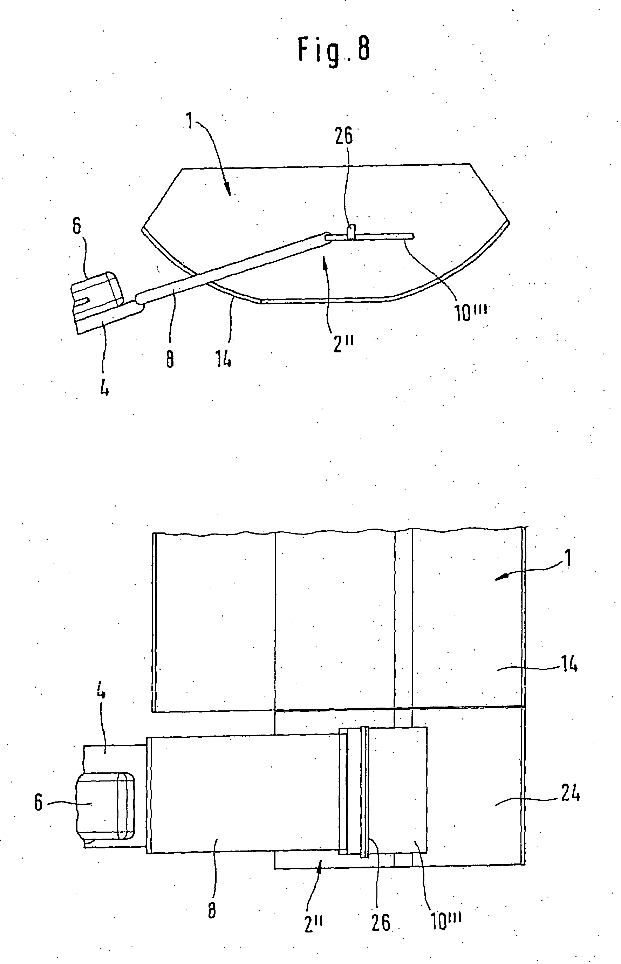

In Fig. 8 ist in einem schematisch vereinfachten Schnitt als auch in einer schematisch vereinfachten Draufsicht eine vierte Variante einer Zwischenfördereinrichtung 2" beim Beladen mit darunter angeordneter DWU 24 gezeigt, wobei die Zwischenfördereinrichtung 2" eine weitere Variante des zweiten Förderorgans 10"' mit einem in Längsrichtung ausgebildeten Schiebeorgan 26 aufweist.

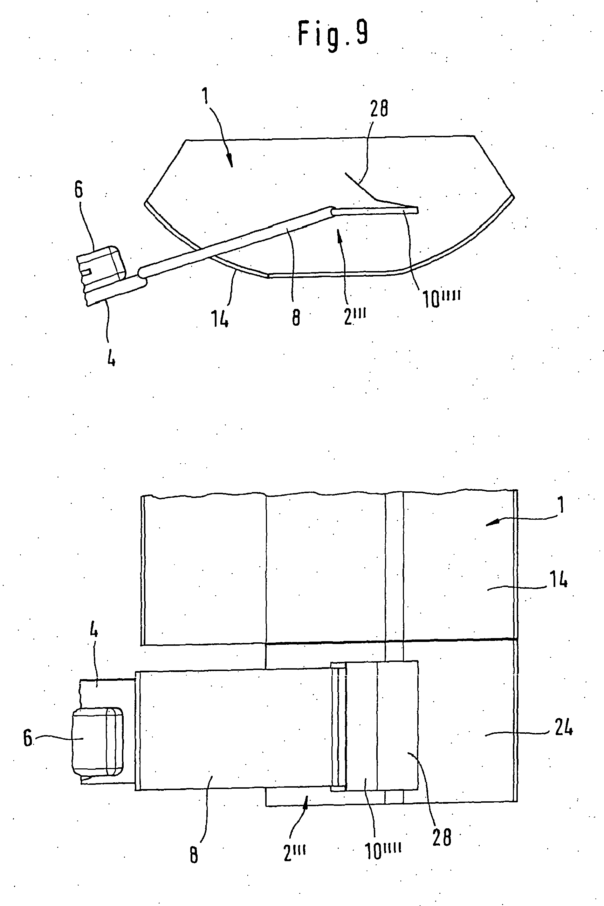

In Fig. 9 ist in einem schematisch vereinfachten Schnitt als auch in einer schematisch vereinfachten Draufsicht eine vierte Variante einer Zwischenfördereinrichtung 2"' beim Beladen mit darunter angeordneter Auffangschale 24 gezeigt. Die weitere Variante der Zwischenfördereinrichtung 2"' weist eine weitere Variante des zweiten Förderorgans 10"" auf, das über eine aufklappbare schiefe Ebene 28 verfügt.

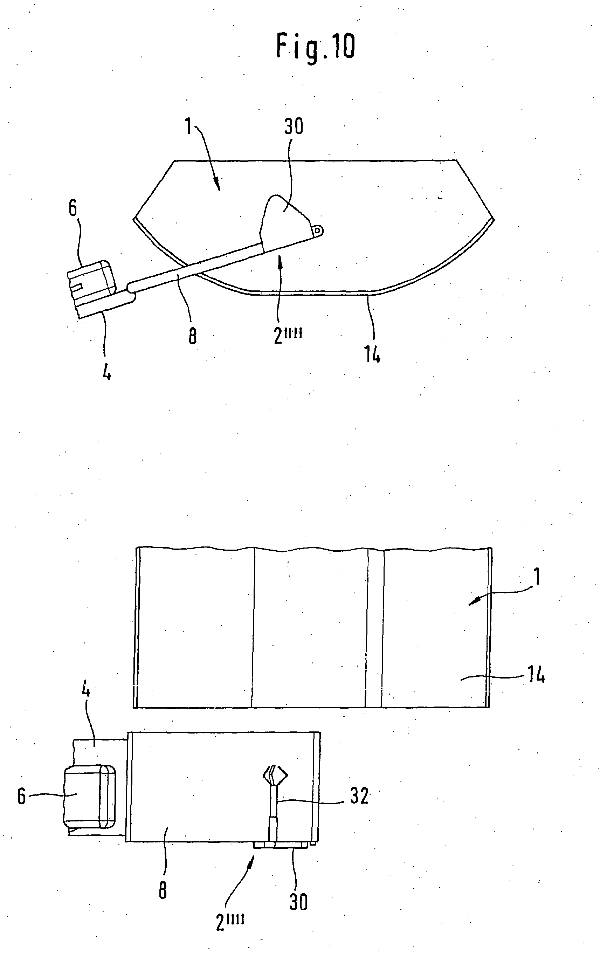

Die in Fig. 10 bis 12 veranschaulichten Entladevorgänge sind ohne Auffangschale (kurz: DWU) dargestellt.

In Fig. 10 ist in einem schematisch vereinfachten Schnitt als auch einer schematisch vereinfachten Draufsicht eine fünfte Variante einer Zwischenfördereinrichtung 2"" beim Entladen ohne darunter angeordneter DWU dargestellt. Diese Variante der Zwischenfördereinrichtung 2"" verfügt lediglich über ein erstes Förderorgan 8, an dessen in den Laderaum 1 hineinreichenden Endabschnitt das an einem Abstützelement 30 gelagerte Greiforgan 32 angelenkt ist. Das Greiforgan 32 ergreift auf der Transporteinrichtung 14 herangeführtes Stückgut und zieht es auf das erste Förderorgan 8.

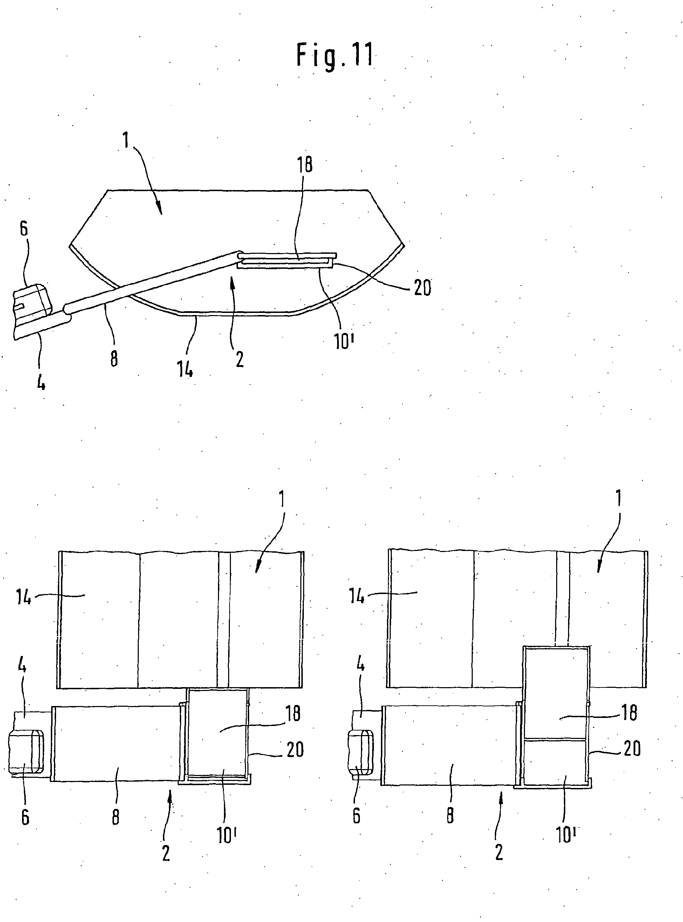

In Fig. 11 ist in einem schematisch vereinfachten Schnitt als auch einer schematisch vereinfachten Draufsicht die in Fig. 2 beim Beladen gezeigte zweite Variante einer in Fig. 1 gezeigten Zwischenfördereinrichtung 2 mit dem zweiten Förderorgan 10' gezeigt, hier jedoch beim Entladen ohne darunter angeordneter DWU. Das zweite Förderorgan 10' weist hierbei ein Förderband auf, das über einer darunter angeordneten steifen Gleitplatte 18 verläuft, wobei die Platte 18 mit dem Förderband zwischen zwei Stückgüter 6 einschiebbar ist und wobei das obere Stückgut mit dem Förderband wegförderbar ist. Zum Entladen sticht die Platte 18 einem Spatel gleich in Längsrichtung in übereinander liegende Stückgüter am vorderen Ende der Transporteinrichtung 14 hinein, zieht mit dem Förderband ein Stückgut auf sich hinauf und nimmt es bei der Rückwärtsbewegung des Förderbands mit sich mit, um es dann an das erste Förderorgan 8 zu übergeben, so daß es von dort zum Rollfeld-Förderorgan 4 zum weiteren Entladen transportiert werden kann.

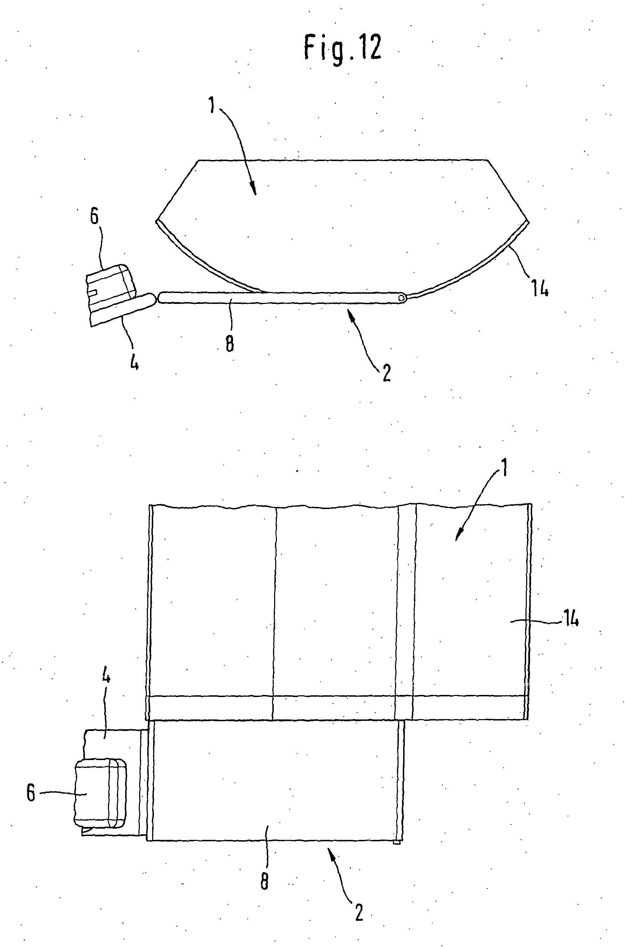

In Fig. 12 ist in einem schematisch vereinfachten Schnitt als auch einer schematisch vereinfachten Draufsicht eine vereinfachte Variante einer Zwischenfördereinrichtung 2 ohne zweites Förderorgan beim Entladen ohne darunter angeordneter DWU dargestellt. Das erste Förderorgan 8 ist auf die Höhe des Laderaumbodens vom Laderaum 1 eingestellt und nimmt von der Transporteinrichtung 14 herangeführtes Stückgut direkt entgegen und transportiert selbiges quer zur Flugzeuglängsachse aus dem Laderaum 1 durch die Laderaumöffnung, die nicht näher dargestellt ist, hinaus und übergibt es zum weiteren Entladen an das Rollfeld-Förderorgan 4.

Mit der auf den Boden des Laderaums abgesenkten Zwischenfördereinrichtung 2 mit auf "Entladen" gestellter taktweiser Förderung des Stückguts durch die Transporteinrichtung 14 zur Zwischenfördereinrichtung 2 hin, kann eine besonders einfache Form des Entladevorgangs erreicht werden, bei der Stückgut von der Transporteinrichtung 14 beim Erreichen der vorderen Kante automatisch auf die Zwischenfördereinrichtung 2 übergeht bzw. fällt und von dieser in Richtung der Laderaumöffnung weg gefördert wird.

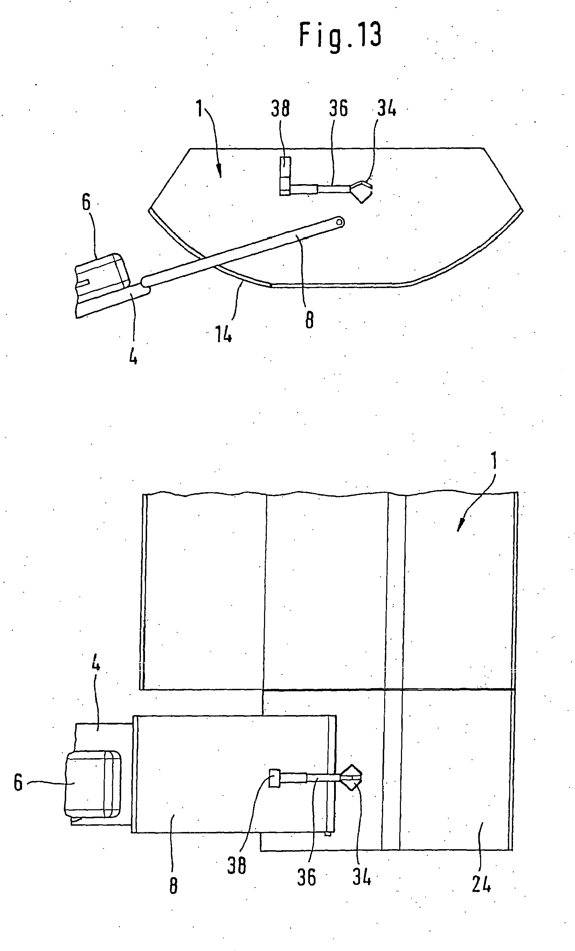

In Fig. 13 ist in einem schematisch vereinfachten Schnitt als auch einer schematisch vereinfachten Draufsicht die in Fig. 12 vereinfachte Variante einer Zwischenfördereiririchtung 2 beim Entladen mit separatem Greifer 34 und mit darunter angeordneter Auffangschale 24 dargestellt. Der separate Greifer 34 ist über einen teleskopartigen Arm 36 vermittels eines entsprechenden Gestänges 38 mit der nicht näher dargestellten Struktur des Laderaumes 1 verbunden. Der Greifer 34 holt Stückgut von der Transporteinrichtung 14 von deren vorderen Ende heran und zieht dieses auf das erste Förderorgan 8 der Zwischenfördereinrichtung 2. Ebenso kann der Greifer 34 Stückgut, welches von der Transporteinrichtung 14 auf die Auffangschale 24 hinausgeschoben worden ist, ergreifen und auf das erste Förderorgan 8 der Zwischenfördereinrichtung 2 ziehen, von der es an das Rollfeld-Förderorgan 4 zum Entladen übergeben werden kann.

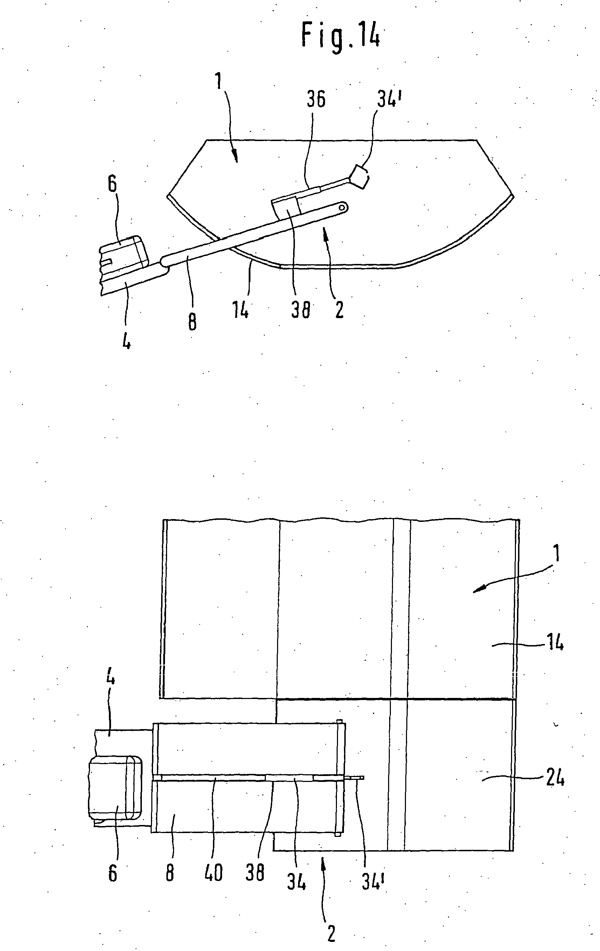

In Fig. 14 ist in einem schematisch vereinfachten Schnitt als auch einer schematisch vereinfachten Draufsicht die in Fig. 2 gezeigte vereinfachte Variante einer Zwischenfördereinrichtung 2 beim Entladen mit integriertem Greifer 34' und mit darunter angeordneter DWU 24 dargestellt. Der integrierte Greifer 34' ist über einen teleskopartigen Arm 36 und vermittels einem Gestänge oder einer Schulter 38 mit dem ersten Förderorgan 8 der Zwischenfördereinrichtung 2 vermittels einer darauf angeordneten Führungsschiene 40 verbunden. Die Funktionsweise des Greifers 34 ist die selbe, wie die vorstehend diskutierte Funktionsweise des separaten, an der Flugzeugstruktur angelenkten Greifers 34, der in Fig. 13 dargestellt ist. In der in Fig. 14 dargestellten Ausführungsform weist das erste Förderorgan 8 beispielsweise zwei parallele Förderbänder auf, zwischen welche der Greifer 34 abgesenkt werden kann, so daß Stückgut 6 mit den Förderbändern über den abgesenkten Greifer 34 hinweg transportiert werden kann.

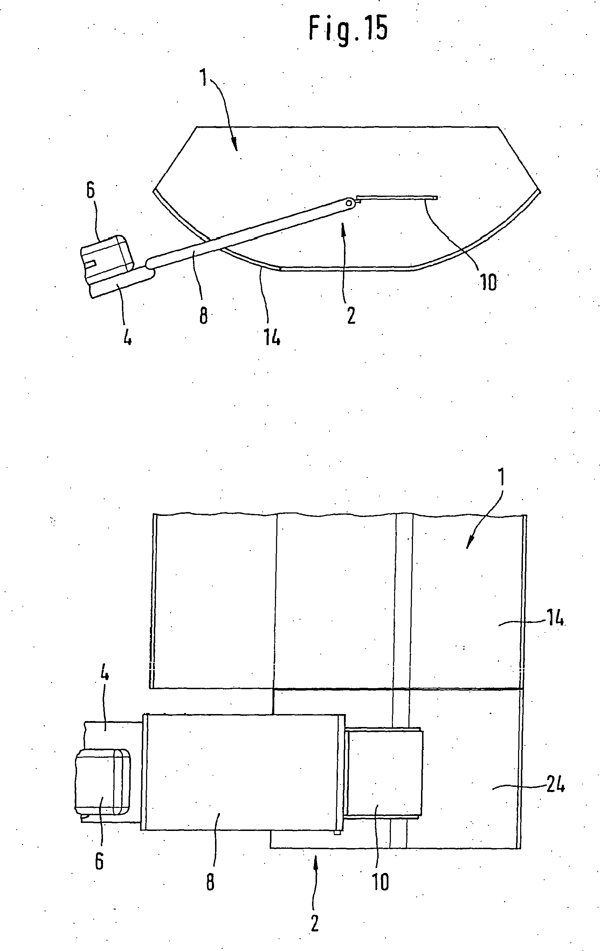

In Fig. 15 ist in einem schematisch vereinfachten Schnitt als auch einer schematisch vereinfachten Draufsicht eine weitere Variante einer Zwischenfördereinrichtung 2 beim Entladen mit darunter angeordneter Auffangschale 24 gezeigt. Diese weitere Variante der Zwischenfördereinrichtung 2 weist ein zweites Förderorgan 10 auf, das als dünne Platte ausgebildet ist. Die Platte 10 ist in deren Längsrichtung parallel zur Längsrichtung des Flugzeuges verschieblich zur Stirnseite des ersten Förderorgans 8 gelagert und hier in einer mittleren Position gezeigt. Die Gleitplatte 10 kann mit einem darüber angeordneten bzw. gleitenden Förderband zwischen zwei Stückgüter eingeführt werden, wobei dann durch die Förderbewegung des Förderbandes das obere Stückgut mit dem Förderband aufgenommen und von diesem wegtransportiert wird.

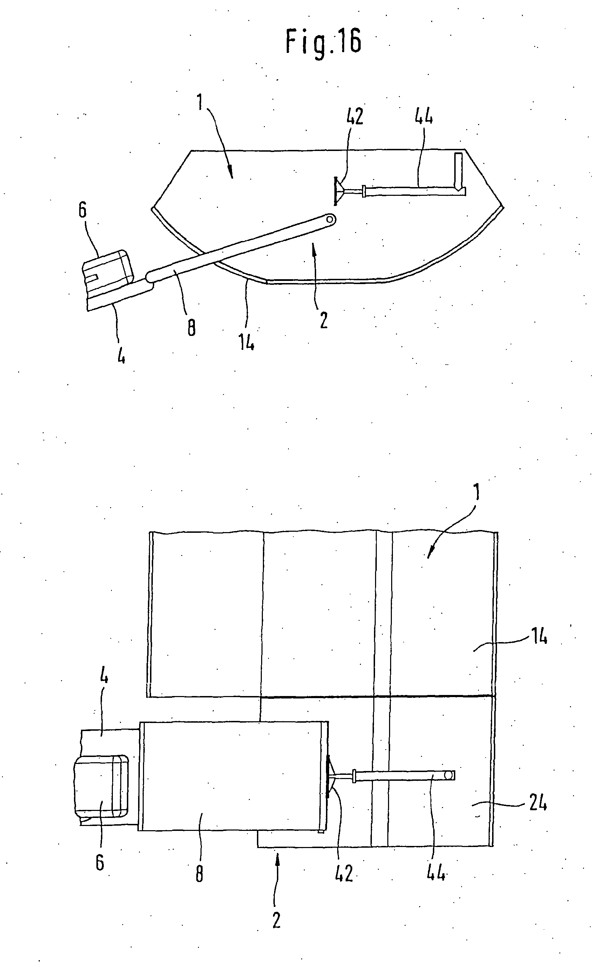

Schließlich ist in Fig. 16 in einem schematisch vereinfachten Schnitt als auch einer schematisch vereinfachten Draufsicht eine bereits in Fig. 12 gezeigte vereinfachte Variante einer Zwischenfördereinrichtung 2 erneut nun beim Entladen mit darunter angeordneter Auffangschale 24 als auch mit separatem Schieber 42 dargestellt. Der separate Schieber 42 ist über ein Gestänge 44 mit der nicht näher dargestellten Struktur des Laderaumes 1 verbunden. Der Schieber 42 schiebt Stückgut, das von der Transporteinrichtung 14 aus dem Laderaum 1 zum Entladen herangeführt wird, auf das erste Förderorgan 8 der Zwischenfördereinrichtung 2, so daß es von dieser nach draußen befördert werden kann. Der Schieber 42 kann ebenso Stückgut von der Auffangschale 24 bzw. DWU auf das Förderorgan 8 schieben.

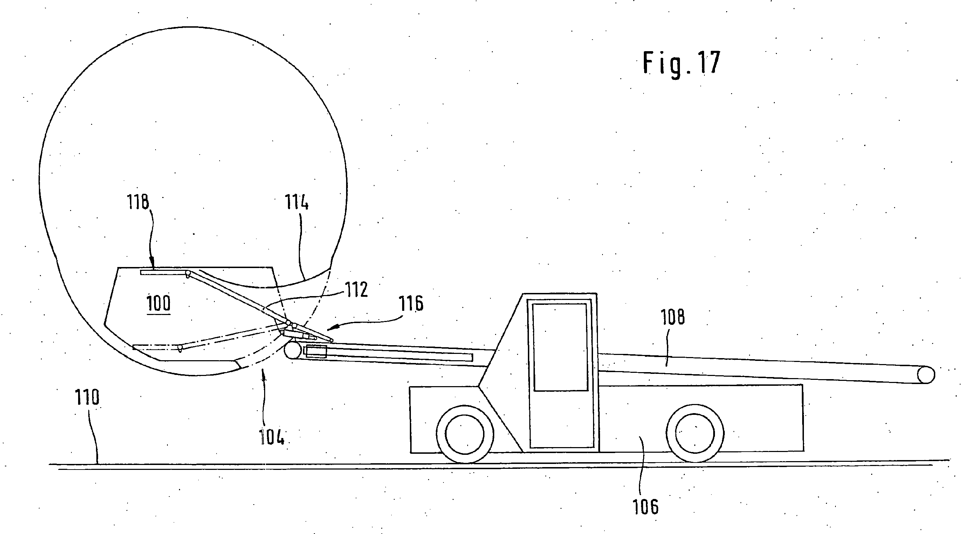

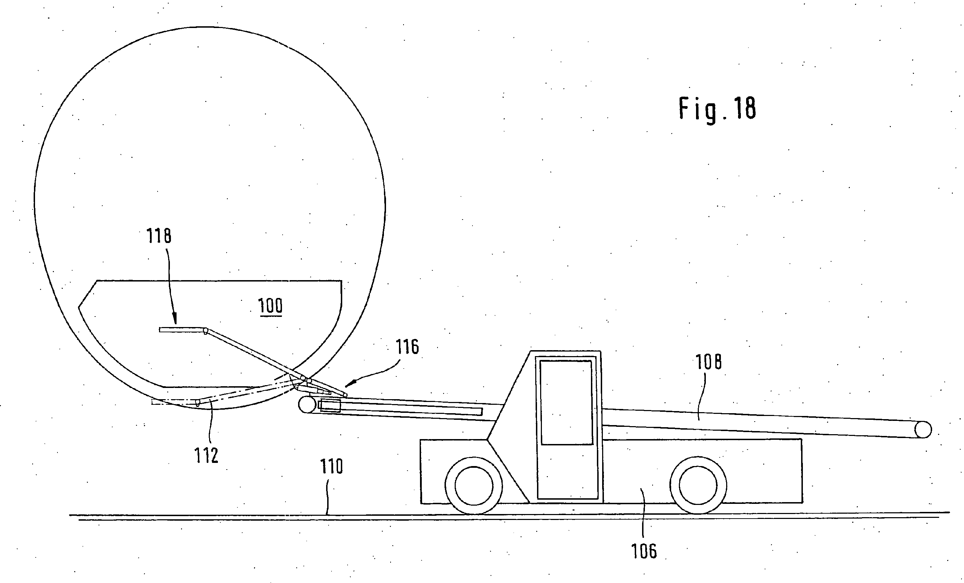

In Fig. 17 bis 21 ist eine weitere Variante des erfindungsgemäßen Systems als auch der erfindungsgemäßen Zwischenfördereinrichtung in schematisch vereinfachter Weise dargestellt. Gleiche oder gleichwirkende Teile werden zur Vereinfachung der Diskussion mit den selben Bezugszeichen versehen.

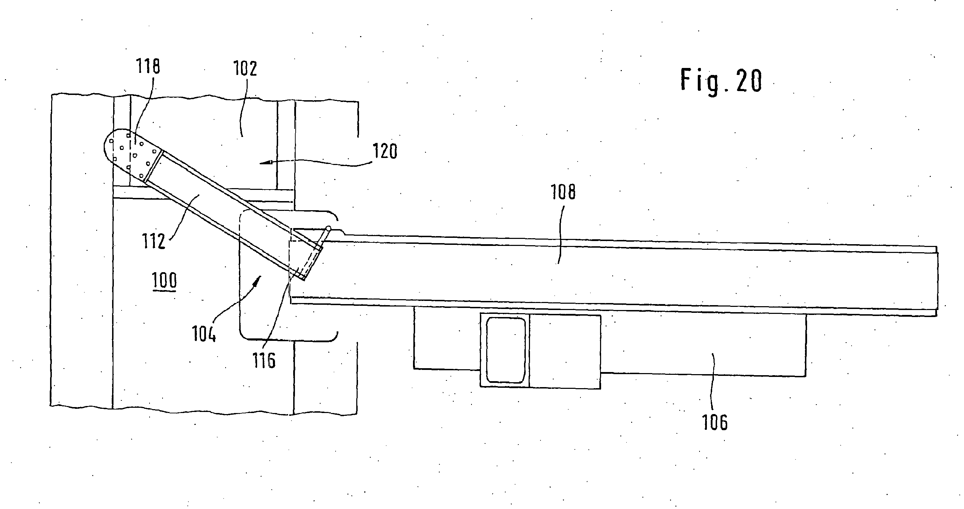

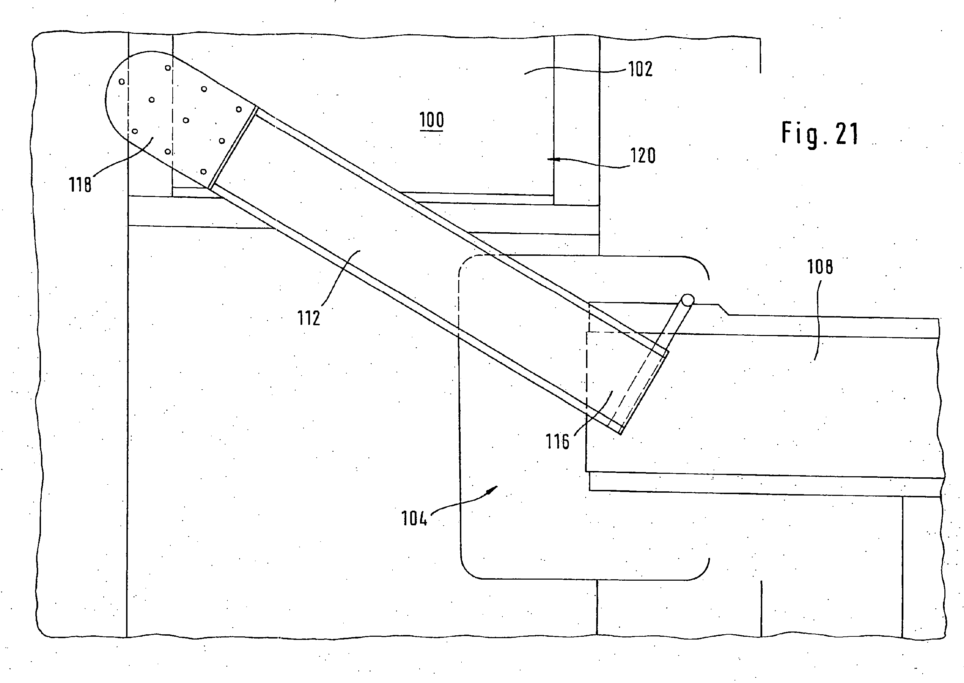

In Fig. 17 ist in einer schematisch vereinfachten seitlichen Ansicht eine weitere Variante des erfindungsgemäßen Systems zum Be- und Entladen von Stückgut in einem Laderaum 100 eines Flugzeugs beim Beladen gezeigt. Wie in Fig. 20 oder 21 besonders gut erkennbar, ist der Boden des Laderaums 100 flächig mit einer Transporteinrichtung 102 abgedeckt, die bevorzugt als Transportteppich ausgebildet sein kann. Dieser Transportteppich 102 dient zur, insbesondere taktweisen, Förderung von Stückgut in Richtung auf das innere Ende des Laderaums 100 beim Beladen bzw. von diesem weg beim Entladen. Dabei reicht die Transporteinrichtung 102 mit deren vorderen Ende bis in den Bereich der Laderaumöffnung 104 im Flugzeugrumpf. Seitlich vom Flugzeug steht beispielsweise eine mobile Umschlagmaschine 106, die ein Förderorgan 108 aufweist, zum Transport von Stückgut zwischen der Rollfeldebene 110 und der Laderaumöffnung 104. Zwischen dem flugzeugseitigen Ende des äußeren Förderorgans 108 und dem vorderen Ende der Transporteinrichtung 102 im Laderaum 100 bildet eine Zwischenfördereinrichtung 112 eine Art Brücke, mittels der der Abstand zwischen dem flugzeugseitigen Ende des äußeren Förderorgans 108 und dem vorderen Ende der Transporteinrichtung 102 überbrückt werden kann. Mit der Zwischenfördereinrichtung 112 wird Stückgut beim Beladen zunächst im wesentlichen quer zur Flugzeuglängsachse tiefer in den Flugzeugrumpf hinein gefördert. Daraufhin ist das Stückgut dann im Laderaum 100 manuell drehbar und weiter im wesentlichen in Flugzeuglängsrichtung beförderbar, so daß es auf dem vorderen Ende der Transporteinrichtung 102 im Laderaum 100 abgelegt werden kann. Beim Entladen kann mit der Zwischenfördereinrichtung 112 über das vordere Ende der Transporteinrichtung 102 hinaus in die Ebene der Laderaumöffnung 104 gefördertes Stückgut im wesentlichen quer zur Flugzeuglängsachse durch die Laderaumöffnung 104 hindurch weggefördert werden.

Bei dem hierbei schematisch vereinfacht gezeigten Flugzeug wird die Laderaumlucke 114 durch ein Verschwenken nach oben innen geöffnet.

Wie in Figuren 17 bis 19 gut erkennbar, reicht das flugzeugseitige Ende des äußeren Förderorgans 108 bis an den Bereich der Laderaumöffnung 104 heran, jedoch nicht hinein, so daß beim Positionieren der mobilen Umschlagmaschine 106 keine Gefahr der Beschädigung der Laderaumöffnung 104 besteht.

Mit dem erfindungsgemäßen System als auch der erfindungsgemäßen Zwischenfördereinrichtung 112 ist Stückgut auf der Transporteinrichtung 102 im Laderaum 100 beim Beladen gezielt ablegbar und beim Entladen von dort gezielt weg förderbar.

Die Zwischenfördereinrichtung 112 kann sowohl in Förderrichtung des äußeren bodengestützten Förderorgans 108 hin und her verschoben als auch relativ zu diesem um einen Winkel von etwa -30° bis + 30° verschwenkt werden, so daß das dem äußeren Förderorgan 108 zugewandte 116 der Zwischenfördereinrichtung 112 immer mit dem äußeren Förderorgan 108 überlappt und das im Inneren des Laderaums 100 befindliche innere Ende 118 der Zwischenfördereinrichtung 112 immer mit dem der Laderaumöffnung 104 zugewandten Endbereich 120 der Transporteinrichtung 102 überlappt, wie dies in Fig. 20 und 21 veranschaulicht ist.

Die Zwischenfördereinrichtung 112 weist an deren Unterseite im Überlappungsbereich 122 mit dem äußeren Förderorgan 108 ein nicht näher dargestelltes Gleitelement auf, das beispielsweise als Rad oder Rolle ausgebildet sein kann. Dieses Gleitelement dient zur verschieblichen Abstützung der Zwischenfördereinrichtung 112 auf der Oberseite 124 des äußeren Förderorgans 108 in dessen Endbereich.

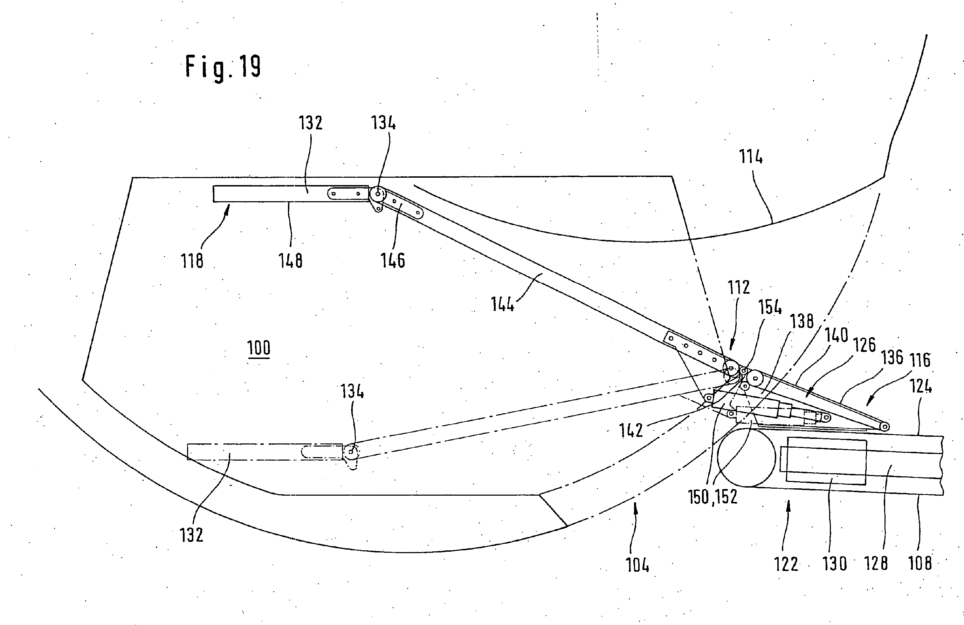

Die Zwischenfördereinrichtung 112 weist im Überlappungsbereich 122 mit dem äußeren Förderorgan 108 einen Ausleger 126 auf, der zwischen Fördereinrichtung 112 angelenkt ist. Der Ausleger 126 ist mit dessen von der Zwischenfördereinrichtung 108 wegweisenden Ende mit einem dort angelenkten Ende nicht mehr dargestellten Gelenk gegen eine Gleitschiene 128 abgestützt. Die Gleitschiene 128 ist parallel zur Längsrichtung des äußeren Förderorgans 108 orientiert und an diesem befestigt. Die Gleitschiene 128 dient zur verschieblichen Abstützung der Zwischenfördereinrichtung 112 in Förderrichtung des äußeren Förderorgans 108. Hierfür ist in der Fig. 19 dargestellten Variante ein verschieblicher Schlitten 130 vorgesehen, der mit hier nicht näher dargestellten Elementen mit dem Gelenk des Auslegers 126 verbunden ist.

Wie insbesondere in Fig. 17 bis 19 veranschaulicht, ist das dem vorderen Ende 120 der Transporteinrichtung 102 im Laderaum 100 zugewandte Ende 108 der Zwischenfördereinrichtung 112 in der Höhe veränderbar und zwar relativ zu dem äußeren Förderorgan 108 zugewandten Anfang 116 der Zwischenfördereinrichtung 112. Dabei wird insbesondere in Fig. 19 deutlich, daß ein Endabschnitt 132 der Zwischenfördereinrichtung 112 derart um eine Achse 134 quer zur Verrichtung der Zwischenfördereinrichtung 112 verschwenkbar ist, daß dieser Endabschnitt 132 horizontal ausrichtbar ist. Ein Anfangsabschnitt 136 der Zwischenfördereinrichtung 112 ist mit einem vorbestimmten Neigungswinkel, der beispielsweise zwischen 10° bis 30° betragen kann, zum Neigungswinkel des äußeren Förderorgans 108 orientiert.

Dabei ist die Zwischenfördereinrichtung 112 mit deren Förderrichtung für die Förderung von Stückgut im wesentlichen quer zur Flugzeuglängsachse, in dem Winkelbereich von etwa -30° bis +30° relativ zur Förderrichtung des äußeren Förderorgans 108 verschwenkbar.

Die tragende Struktur der Zwischenfördereinrichtung 112 ist aus leichten Werkstoffen, wie beispielsweise Aluminium oder Faserverbundwerkstoffen hergestellt.

Wie des weiteren insbesondere aus Fig. 19 erkennbar ist, weist die Zwischenfördereinrichtung 112 einen ersten sich gegen das äußere Förderorgan 108 abstützenden Rahmen 138 auf. Der Rahmen 138 trägt ein erstes Förderorgan 140, das beispielsweise als Förderband ausgebildet sein kann. Dieses erste Förderorgan 140 nimmt beim Beladen Stückgut beispielsweise im Bereich der Laderaumöffnung 104 des Flugzeugs vom Flugzeug zugewandten Ende 122 des äußeren Förderorgans entgegen und befördert selbiges im wesentlichen quer zur Flugzeuglängsachse weiter, wobei unter im wesentlichen quer zur Flugzeuglängsachse die vorstehend diskutierte Streubreite der Richtungstoleranz von -30° bis +30° verstanden wird. An das Ende 142 des ersten Förderorgans 140 ist ein zweites Förderorgan 144 angeschlossen, das beispielsweise ein Förderband sein kann. Dieses zweite Förderorgan 144 dient zur Überbrückung der Distanz vom Ende 122 des äußeren Förderorgans 108 ins Innere des Laderaums 100. Das zweite Förderorgan 144 nimmt beim Beladen Stückgut beispielsweise im Bereich der Laderaumöffnung 104 des Flugzeugs vom Ende 142 des ersten Förderorgans 140 entgegen und fördert dieses im wesentlichen quer zur Flugzeuglängsachse tiefer in den Flugzeugrumpf hinein. An das Ende 146 des zweiten Förderorgans 144 schließt sich ein drittes Förderorgan 148 an, welches vorzugsweise als Rollenplatte ausgebildet ist. Beim Beladen nimmt das dritte, als Rollenplatte ausgebildete Förderorgan 148 Stückgut vom Ende 146 des zweiten Förderorgans 144 entgegen und erlaubt eine manuelle Drehung des auf dem dritten Förderorgan 148 drehbar liegenden Stückgut derart, daß das Stückgut im wesentlichen in Flugzeuglängsrichtung zum vorderen Ende 120 einer im Laderaum 100 vorhanden Transporteinrichtung 102 hin weiter beförderbar ist.

Beim Entladen wird dementsprechend vom vorderen Ende 120 der im Laderaum 100 vorhandenen Transporteinrichtung 102 Stückgut zum dritten Förderorgan 148 in der Weise entgegengenommen, daß es von einer in diesem Bereich tätigen Person ohne wesentlichen Kraftaufwand auf das dritte Förderorgan 148 aufbringbar ist, wo es drehbar gelagert ist, so daß es gegebenenfalls manuell gedreht werden kann und an das zweite Förderorgan 144 übergebbar abgestützt ist. Dabei fördert das zweite Förderorgan 144 Stückgut im wesentlichen quer zur Flugzeuglängsachse zur Laderaumöffnung 104 und/oder durch diese hindurch und übergibt das Stückgut an das erste Förderorgan 140, welches das Stückgut im wesentlichen quer zur Flugzeuglängsachse zum äußeren Förderorgan 108 weiterfördert und an dieses zur Weiterförderung übergibt. Am Rahmen 138 des ersten Förderorgans 140 ist ein nicht näher dargestelltes Gleitelement, das beispielsweise als Rad oder Rolle ausgebildet sein kann, angelenkt. Ferner ist am Rahmen 138 des ersten Förderorgans 140 ein Ausleger angelenkt, der beispielsweise als zweiarmiger Ausleger ausgebildet sein kann. Dabei können die beiden Arme 150 und 152 längenveränderlich als Teleskoparme ausgebildet sein, so daß um den beiden Armen mit dem näher dargestellten Gelenk ausgebildetes Dreieck in dessen Geometrie veränderlich ist. Auf diese Weise kann die Zwischenfördereinrichtung 112 einerseits besonders stabil und erschütterungsfrei am äußeren Förderorgan 108 angelenkt werden und andererseits zugleich relativ zu diesem verschwenkbar gehalten sein.

Das zweite Förderorgan ist derart am Rahmen 138 des ersten Förderorgans 140 angelenkt, daß es um eine Achse 154 quer zur Förderrichtung verschwenkbar ist, beispielsweise um einen Winkelbereich von -15° bis +45° relativ zur Horizontalen, zur Veränderung der Höhe des Endes 146 des zweiten Förderorgans 144 relativ zu dessen Anfang. Je nach Bedarf und Ausrichtung des äußersten Förderorgans 108 kann auch eine Verschwenkbarkeit des zweiten Förderorgans 144 um einen Winkelbereich von etwa -30° bis +30° sinnvoll sein. Das dritte Förderorgan 148 ist um eine Achse 134 relativ zum zweiten Förderorgan 144 verschwenkbar, so daß im Betrieb der Zwischenfördereinrichtung 112 horizontal ausrichtbar ist. Dabei sind dem zweiten und/oder dritten Förderorgan dessen Hub-, Senk- oder Schwenk-Bewegung unterstützende Elemente zugeordnet, wie beispielsweise ein beidseits der Ränder des zweiten Förderorgans 144 angeordneter Parallelogramm-Lenker zur Unterstützung einer Hub-, Senk- oder Schwenk-Bewegung, so daß derlei Bewegungen von einer im Laderaum 100 tätigen Person Näherungskraft frei vorgegeben werden können.

Die Zwischenfördereinrichtung 112 verfügt darüber hinaus über ein Multifunktions-Bedienelement, was nicht näher dargestellt ist. Das Multifunktions-Bedienelement ist im Bereich des dritten Förderorgans 148 angeordnet, und kann als Multifunktions-Hebel ausgebildet sein. Vermittels des Multifunktions-Bedienelements kann beispielsweise die horizontale Ausrichtung des dritten Förderorgans 148, die Neigung des zweiten Förderorgans 144, die Positionierung des ersten Förderorgans 140 auf dem äußeren Förderorgan 108, die Förderrichtung, die Fördergeschwindigkeit oder weitere Funktionen gesteuert werden.

Vermittels der nicht näher dargestellten Rolle zur Abstützung der Zwischenfördereinrichtung 112 auf dem äußeren Förderorgan 108 wird im Betrieb ein geringer Spalt zwischen den Förderbändern des ersten Förderorgans 140 der Zwischenfördereinrichtung 112 und dem äußeren Förderorgan 108 von etwa 5 - 10 mm eingehalten, so daß diese beiden dicht benachbarten Förderbänder zwar möglichst nahe beieinander zu liegen kommen, jedoch nicht gegeneinander aufeinander reiben. Damit ist ein optimaler Übergang von Stückgut vom Förderband des äußersten Förderorgans 108 auf das Förderband des ersten Förderorgans 140 der Zwischenfördereinrichtung 112 gewährleistet.

Das nicht näher dargestellte Gelenk mit dem der Ausleger 138 an der Gleitschiene 128 über den Gleitschlitten 130 angelenkt ist, gewährleistet sowohl eine ausreichend starke Abstützung der gesamten Zwischenfördereinrichtung 112 nebst darauf im Betrieb befindlichen Stückguts gegen das im Überlappungsbereich 122 unterhalb des Rahmens 138 befindliche äußere Förderorgan 108. Dabei kann das Gelenk translatorische als auch rotatorische Bewegungen zulassen.

Die Antriebseinrichtung für die Förderorgane der Zwischenfördereinrichtung können beispielsweise elektrische Stellmotoren sein. Es sind aber ebenso hydraulische oder pneumatische Antriebe denkbar. Ebenso ist denkbar, daß die Unterstützungselemente, die die Hub-, Senk- oder Schwenk-Bewegungen der drei Förderorgane der Zwischenfördereinrichtung 112 unterstützen als aktive Elemente, wie beispielsweise Hydraulikzylinder, Pneumatikzylinder oder elektrische Stellmotoren ausgebildet sind.

Die Länge der Zwischenfördereinrichtung beträgt in einer bevorzugten Ausführungsform in etwa 1,50 m bei einer Breite von etwa 0,40 m. Das Gesamtgewicht der Zwischenfördereinrichtung liegt dabei unter 100 kg. Aufgrund der damit geringen Massenkräfte ist eine leichte Bewegbarkeit der Zwischenfördereinrichtung 112 in jedem Betriebszustand garantiert. Zugleich ist das Risiko einer Beschädigung der Flugzeugstruktur insbesondere im Laderaum 100 bei einer versehentlichen Berührung eines Endes der Zwischenfördereinrichtung 112 mit der Flugzeugstruktur aufgrund der geringen Massenkräfte vernachlässigbar gering. Zum weiteren Schutz gegen Beschädigungen und/oder Verletzungen sind die Ränder oder Ecken der Zwischenfördereinrichtung 112 mit entsprechend weichem Material verkleidet.

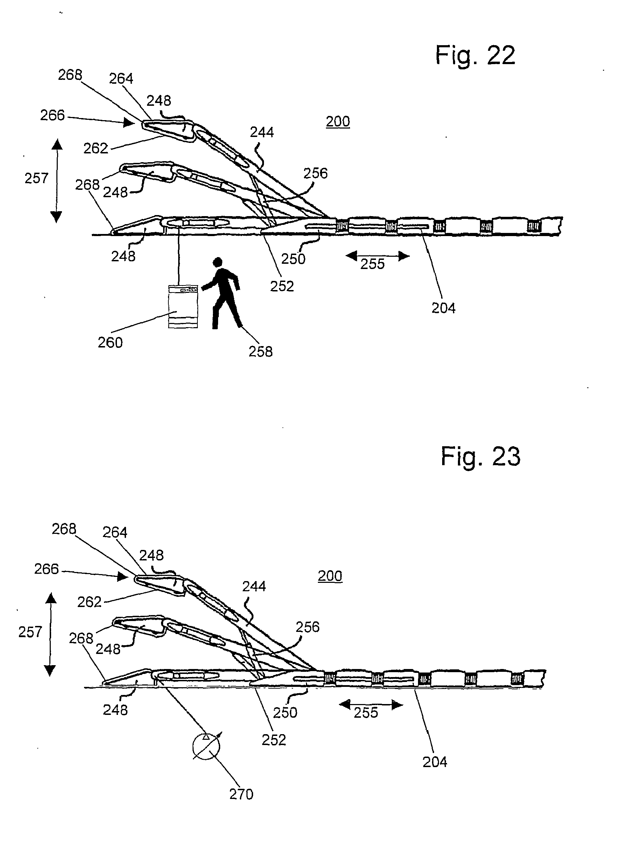

Fig. 22 bis 25 zeigen weitere Varianten einer erfindungsgemäßen Fördereinheit. In Fig. 22 ist dabei in einer schematisch vereinfachten Seitenansicht eine weitere beispielhafte Variante der vorstehend diskutierten Fördereinheit näher erläutert, wobei diese im flugzeuginneren Ende des Laderaums 200 so gezeigt ist, als befände man sich im Laderaum 200 selbst, wobei dessen äußere Begrenzungen nicht näher dargestellt sind.

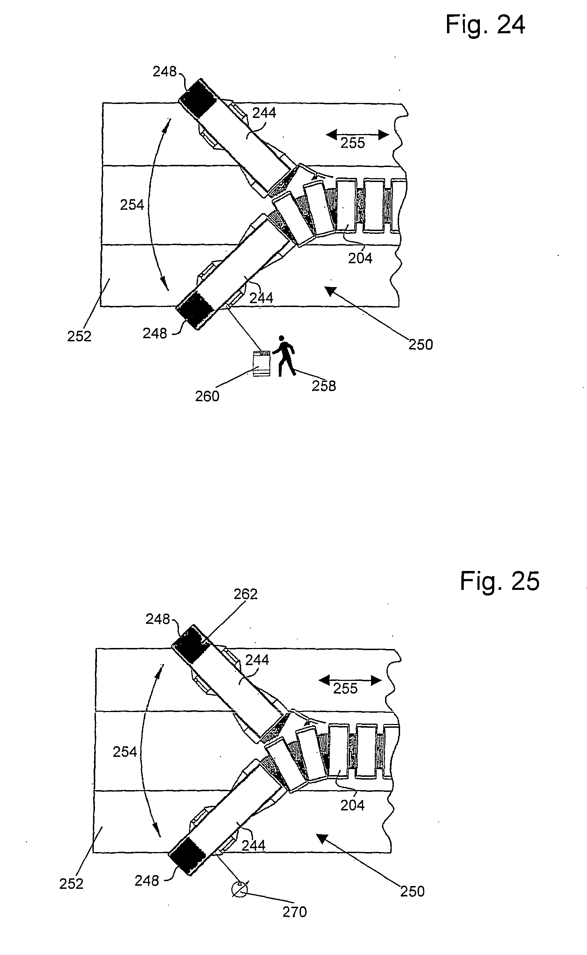

Ein erstes Förderorgan 204 reicht nach Bedarf bis zum hinteren Ende in den hier nicht weiter dargestellten Laderaum 200 hinein. Am ersten Förderorgan 204 ist ein zweites Förderorgan 244 angelenkt, an welchem wiederum ein drittes Förderorgan 248 angelenkt ist. Dabei weist die Spitze 250 des ersten Förderorgans 204 im Laderaum 200 in Richtung einer hier nicht dargestellten Begrenzungswand des Laderaums 200 vom restlichen Flugzeugrumpf. Das vordere Ende 250 des ersten Förderorgans 204 liegt auf dem Laderaumboden 252 auf bzw. kann über diesen bewegt werden, und ist dort horizontal quer zur Flugzeuglängsachse verschieblich bzw. verschwenkbar, wie dies in Fig. 24 mit dem Pfeil 254 symbolhaft angedeutet ist. Mit dem Pfeil 255 wird die Veränderbarkeit des Förderorgans 204 in Längsrichtung des Flugzeugrumpfes angedeutet. Damit kann die Spitze 250 des ersten Förderorgans 204 vom Anfang des Laderaums 200, der nach einem der Laderaumöffnung zugeordneten Bereich beginnt bzw. sich an diesen anschließt, bis zu dessen Ende verfahren werden.

Das dritte Förderorgan 248 kann in seiner Höhe relativ zum Boden 252 verstellt werden, in dem die Neigung des zweiten Förderorgans 244 verändert wird. Die Neigungsveränderung des zweiten Förderorgans 244 wird mit dessen Hub-, Senk- oder Schwenkbewegung unterstützenden Elementen 256 vorgenommen. Derlei Elemente 256 können beispielsweise kraftbetätigte Parallelogramm-Lenker, Federspeicher, elektrisch betriebene Stellmotoren oder dergleichen sein. Dementsprechend ist in Fig. 22 die Höhenverstellung des dritten Förderorgans 248 mit dem Pfeil 257 symbolisiert, wobei drei Stellungen des dritten Förderorgans 248 gezeigt sind, nämlich eine näherungsweise bis knapp unter einer nicht dargestellten Decke des Laderaums 200 angehobene Position des dritten Förderorgans 248, eine etwas weiter unten liegende Position und eine knapp über dem Boden liegende untere Position.

Eine sich im Laderaum 200 befindende Person 258 kann durch Betätigung eines Multifunktions-Bedienelements 260 die horizontale Ausrichtung des dritten Förderorgans 248 bzw. dessen Höhenverstellung 257, die Neigung des zweiten Förderorgans 244, die Positionierung des ersten Förderorgans 204 im Laderaum 200 bzw. dessen Längsveränderung 255 oder dessen Querveränderung 254, die Förderrichtung, die Fördergeschwindigkeit oder weitere Funktionen gezielt aktivieren, ändern oder beenden.

Die Person 258 kann das dritte Förderorgan 248 so positionieren und dessen Förderelemente derart betätigen, daß Stückgut gezielt auf dem dafür vorgesehenen Ablageplatz abgelegt oder von dort wieder weggeholt werden kann. Das dritte Förderorgan kann hierfür beispielsweise bewegliche Schieber, schräg anstellbare Gleitflächen, Greifer, Förderbänder oder dergleichen aufweisen, wobei Förderbänder bevorzugt werden.

In der hier dargestellten Variante verfügt das dritte Förderorgan 248 über ein Förderband 262. Das Förderband 262 verläuft über eine darunter angeordnete steife Gleitplatte 264. Das Fördermittel bzw. Förderband 262 wird an der dem Stückgut 6 zugewandten Spitze 266 des dritten Förderorgans 248 um eine Umlenkrolle 268 umgelenkt. Der Durchmesser der Umlenkrolle 268 ist dabei so klein gewählt, daß das Förderorgan 248 beispielsweise eine Art Spatel oder Zunge ausbildet, die gegebenenfalls zumindest ein Stück weit zwischen zwei aufeinander liegende Stückgüter bzw. Gepäckstücke hineingeschoben werden kann, so daß beim Entladen ein teilweise auf der Spitze 266 des dritten Förderorgans 248 aufliegendes Stückgut 6 von dem Förderband 262 ähnlich einer Zunge aufgeleckt bzw. aufgezogen und weg gefördert werden kann.

Mit dem Förderband 262 des dritten Förderorgans 248 kann ein vom ersten Förderorgan 204 über das zweite Förderorgan 244 herangefördertes Stückgut gezielt auf dem gewünschten Ablageplatz abgelegt werden. Umgekehrt kann beim Entladen, Stückgut gezielt von einem Ablageplatz, wo es sich gerade befindet, durch das dritte Förderorgan 248 aufgenommen an das zweite Förderorgan 244 übergeben, von diesem an das erste Förderorgan 204 weitergereicht nach draußen transportiert werden.

Alternativ oder ergänzend zum Förderband 262 können auch andere Fördermittel, wie beispielsweise in Förderrichtung des dritten Förderorgans wirkende Schieber, Greifer, abkippende Rutschen oder dergleichen vorgesehen werden, um Stückgut beim Beladen vom dritten Förderorgan kraftunterstützt oder selbsttätig auf dem gewünschten Ablageplatz ablegen zu lassen oder beim Entladen von dort weg zu holen. Für den alternativen oder auch ergänzenden Einsatz anderer Fördermittel können allerdings bauliche Änderungen oder Anpassungen am dritten Förderorgan notwendig werden, damit die Fördermittel z.B. beim Beladen Stückgut von hinten anschieben können, ohne zugleich in Förderrichtung der Stückgüter diesen im Wege zu sein. Die notwendigen konstruktiven Anpassungen sind mit entsprechendem Aufwand verbunden, weshalb in der hier dargestellten Ausführungsform des dritten Förderorgans ein Förderband als Fördermittel bevorzugt ist.

Eine Gefährdung der Gesundheit der im Laderaum 200 mit dem Be- und Entladen von Stückgut beschäftigten Person 258 ist damit ausgeschlossen, da die Person 258 die Stückgüter 6 nicht mehr selbst unter Einsatz der eigenen Muskelkraft manuell bewegen muß.

Die in Fig. 22 dargestellte Variante mit einem Multifunktions-Bedienelement 260, welches von einer Person 258 bedient wird, ist in Fig. 23 mit einem automatisch arbeitenden Regelsystem 270 gezeigt. Diese Variante einer Fördereinheit mit automatischem Regelsystem 270 ist in Fig. 25 in einer schematisch vereinfachten Draufsicht dargestellt.

Das automatische Regelsystem 270 kann beispielsweise über geeignete Sensoren, Kameras, Regelkreise, Stellmotoren, Aktuatoren, künstliche Intelligenz oder dergleichen verfügen und damit im Laderaum 200 noch nicht belegten Stauraum feststellen bzw. bestimmen, um dort gezielt Stückgut 6 selbsttätig ablegen zu können, oder beim Entladen entsprechend Stückgut 6 gezielt direkt von dessen jeweiligem Ablageplatz selbsttätig aufnehmen und wegfördem zu können.

Die vorliegende Erfindung schlägt damit erstmals ein System zum Be- und Entladen von Stückgut, wie insbesondere Gepäckstücke oder dergleichen in einem Laderaum eines Flugzeugs, vor, mit einer Förderung des Stückgutes in Richtung auf das innere Ende des Laderaumes beim Beladen bzw. von diesem weg beim Entladen, und mit einem Transport des Stückgutes zwischen der Rollfeldebene und der Laderaumöffnung. Bei dem erfindungsgemäßen System ist das Stückgut beim Beladen in Querrichtung zur Flugzeuglängsachse und auch in Flugzeuglängsrichtung in den Flugzeugrumpf hinein förderbar und im Laderaum ablegbar. Beim Entladen in die Ebene der Laderaumöffnung zurück gefördertes Stückgut ist quer zur Flugzeuglängsachse durch die Laderaumöffnung hindurch weg förderbar. Weiterhin schlägt die Erfindung eine Zwischenfördereinrichtung hierfür vor. Insbesondere schlägt die vorliegende Erfindung ein System zum Be- und Entladen von Stückgut in einem Laderaum, insbesondere eines Flugzeugs, vor, mit einer beispielsweise in einer Variante den Boden des Laderaumes flächig abdeckenden Transporteinrichtung zur, insbesondere taktweisen, Förderung des Stückgutes in Richtung auf das innere Ende des Laderaumes beim Beladen bzw. von diesem weg beim Entladen, wobei die Transporteinrichtung mit deren vorderem Ende bis in den Bereich der Laderaumöffnung im Flugzeugrumpf reicht, und mit einem an der Außenseite des Flugzeuges an die Laderaumöffnung anschließenden Förderorgan zum Transport des Stückgutes zwischen der Rollfeldebene und der Laderaumöffnung. Bei dieser Variante des erfindungsgemäßen Systems ist erstmals zwischen dem flugzeugseitigen Ende des äußeren Förderorgans und dem vorderen Ende der Transporteinrichtung im Laderaum wenigstens eine Zwischenfördereinrichtung angeordnet, mit der das Stückgut beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung im Laderaum ablegbar ist, und mit der beim Entladen über das vordere Ende der Transporteinrichtung hinaus in die Ebene der Laderaumöffnung gefördertes Stückgut quer zur Flugzeuglängsachse durch die Laderaumöffnung hindurch weg förderbar ist. Weiterhin schlägt die vorliegende Erfindung erstmals eine Zwischenfördereinrichtung hierfür vor. Ferner gibt die vorliegende Erfindung weitere Alternativen zum System als auch zur Zwischenfördereinrichtung bzw. Fördereinheit an.

## Patentansprüche

1. Fördereinheit zum Be- und Entladen von Stückgut (6), wie insbesondere Gepäckstücke in einem Laderaum (1, 100, 200) eines Flugzeugs, mit der von außerhalb des Flugzeuges von der Rollfeldebene an die Laderaumöffnung heran und durch diese hindurch bis in den Laderaum (1, 100, 200) hinein gefördertes Stückgut (6) im Laderaum (1, 100, 200) weiterförderbar ist,
mit einem ersten Förderorgan (204) zum Transport des Stückgutes im Laderaum (1, 100, 200),
mit welchem von außerhalb des Flugzeugs herangeführtes Stückgut (6) beim Beladen des Laderaums (1, 100, 200) im Laderaum (1, 100, 200) sowohl quer als auch längs zur Flugzeuglängsachse in den Flugzeugrumpf hinein bis in den Bereich eines Ablegeplatzes förderbar ist,
und mit welchem beim Entladen Stückgut (6) aus dem Bereich des Ablegeplatzes bis in die Ebene der Laderaumöffnung zurück förderbar ist, so daß das Stückgut (6) von dort quer zur Flugzeuglängsachse durch die Laderaumöffnung hindurch nach draußen weg förderbar ist,
**dadurch gekennzeichnet, daß**
das im Flugzeugrumpf im Laderaum (1, 100, 200) befindliche Ende (250) des ersten Förderorgans (204) quer zur Flugzeuglängsachse horizontal verschieblich oder verschwenkbar ist und ein sich daran anschließendes zweites Förderorgan (2, 112, 144, 244) mit einem sich daran anschließenden dritten Förderorgan (10, 148, 248) aufweist, die derart angelenkt sind, daß eine Höhenverstellung des dritten Förderorgans (10, 148, 248) im Laderaum (1, 100, 200) durch eine Neigungsverstellung des zweiten Förderorgans (2, 112, 144, 244) erzielbar ist,
und daß das Stückgut (6) im Laderaum (1, 100, 200) beim Beladen - durch Fördermittel (262) des dritten Förderorgans (10, 148, 248) kraftunterstützt oder selbsttätig - durch das dritte Förderorgan (10, 148, 248) gezielt auf dem gewünschten Ablageplatz ablegbar und beim Entladen von dort - durch Fördermittel (262) des dritten Förderorgans (10, 148, 248) kraftunterstützt oder selbsttätig - durch das dritte Förderorgan (10, 148, 248) gezielt aufnehmbar und wegförderbar ist.

2. Fördereinheit nach Anspruch 1, **dadurch gekennzeichnet, daß** dem zweiten und/oder dritten Förderorgan (2, 10, 112, 144, 148, 244, 248) dessen Hub-, Senk-, oder Schwenk-Bewegung unterstützende Elemente (256) zugeordnet sind, wie beispielsweise ein beidseits der Ränder des Förderorgans angeordneter kraftbetätigter Parallelogramm-Lenker, ein Federspeicherzylinder oder dergleichen, damit derlei Bewegungen von einer im Laderaum (1, 100, 200) tätigen Person (258) näherungsweise kraftfrei vorgegeben werden können.

3. Fördereinheit nach Anspruch 1 oder 2, **dadurch gekennzeichnet, daß** ein Multifunktions-Bedienelement (260) vorgesehen ist, mit dem beispielsweise die horizontale Ausrichtung des dritten Förderorgans (10, 148, 248), die Neigung des zweiten Förderorgans (2, 112, 144, 244), die Positionierung des ersten Förderorgans im Laderaum (1, 100, 200), die Förderrichtung, die Fördergeschwindigkeit oder weitere Funktionen steuerbar sind.

4. Fördereinheit nach einem der Ansprüche 1 bis 3, **dadurch gekennzeichnet, daß** das Fördermittel (262) des dritten Förderorgans (10, 148, 248) ein Förderband ist, das über einer darunter angeordneten steifen Gleitplatte (18, 264) verläuft.

5. Fördereinheit nach einem der Ansprüche 1 bis 4, **dadurch gekennzeichnet, daß** eine dem Stückgut (6) zugewandte Umlenkrolle (268) des Förderbands (262) einen derart kleinen Durchmesser aufweist, daß die Spitze (266) des dritten Förderorgans (10, 148, 248) spatel- oder zungenartig ausgebildet ist.

6. Fördereinheit nach einem der Ansprüche 4 oder 5, **dadurch gekennzeichnet, daß** der Reibungskoeffizient µ zwischen wenigstens einem Teil des Stückguts (6) und wenigstens einem Teil der dem Stückgut zugewandten Oberfläche des Förderbands über 0,50, vorzugsweise über 0,60 und besonders bevorzugt über 0,70 beträgt.

7. Fördereinheit nach einem der Ansprüche 4 bis 6, **dadurch gekennzeichnet, daß** das Förderband an dessen dem Stückgut zugewandter Oberfläche die Reibung erhöhende Mittel, wie insbesondere Aufrauhungen, Noppen, Rippen oder dergleichen aufweist.

8. Fördereinheit nach einem der Ansprüche 1 bis 7, **dadurch gekennzeichnet, daß** mit dem im Laderaum befindlichen Ende des ersten Förderorgans (204) und/oder mit dem zweiten Förderogran (2, 112, 144, 244) und/oder mit dem dritten Förderorgan (10, 148, 248) kommunizierende automatische Regelsysteme (270), wie beispielsweise Sensoren, Kameras, Regelkreise, künstliche Intelligenz oder dergleichen, vorgesehen sind.

9. Fördereinheit nach einem der Ansprüche 1 bis 8, **dadurch gekennzeichnet, daß** sie wenigstens eines der Merkmale der Ansprüche 10 bis 58 aufweist.

10. System zum Be- und Entladen von Stückgut (6) in einem Laderaum (1), insbesondere eines Flugzeugs, mit
einer den Boden des Laderaumes (1) flächig abdeckenden Transporteinrichtung (14) zur, insbesondere taktweisen, Förderung des Stückgutes (6) in Richtung auf das innere Ende des Laderaumes (1) beim Beladen bzw. von diesem weg beim Entladen, wobei die Transporteinrichtung (14) mit deren vorderem Ende bis in den Bereich der Laderaumöffnung im Flugzeugrumpf reicht, und mit
einem an der Außenseite des Flugzeuges an die Laderaumöffnung anschließenden Förderorgan (4) zum Transport des Stückgutes zwischen der Rollfeldebene und der Laderaumöffnung,
**dadurch gekennzeichnet, daß**
zwischen dem flugzeugseitigen Ende des äußeren Förderorgans (4) und dem vorderen Ende der Transporteinrichtung (14) im Laderaum (1) wenigstens eine Zwischenfördereinrichtung (2, 2', 2", 2''', 2"") angeordnet ist, mit der das Stückgut (6) beim Beladen zunächst in Querrichtung zur Flugzeuglängsachse tiefer in den Flugzeugrumpf hinein förderbar ist und sodann in Flugzeuglängsrichtung förderbar und auf dem vorderen Ende der Transporteinrichtung (14) im Laderaum (1) ablegbar ist, und mit der beim Entladen über das vordere Ende der Transporteinrichtung (14) hinaus in die Ebene der Laderaumöffnung gefördertes Stückgut (6) quer zur Flugzeuglängsachse durch die Laderaumöffnung hindurch weg förderbar ist.

11. System nach Anspruch 10, **dadurch gekennzeichnet, daß** das Stückgut (6) auf der Transporteinrichtung (14) im Laderaum (1) beim Beladen gezielt ablegbar und beim Entladen von dort gezielt wegförderbar ist.

12. System nach Anspruch 10 oder 11, **dadurch gekennzeichnet, daß** über dem Boden des Laderaums (1) horizontal zwischen der Zwischenfördereinrichtung (2, 2', 2", 2"', 2"") und dem Boden des Laderaums (1) im Bereich der Laderaumöffnung eine den Boden des Laderaums (1) als auch den bodenseitigen Bereich der Laderaumöffnung flächig abdeckende Schale (24) angeordnet ist.

13. System nach Anspruch 12, **dadurch gekennzeichnet, daß** die Schale (24) entlang einer Linie parallel zur Längsachse des Flugzeugs umklappbar ist.

14. System nach einem der Ansprüche 10 bis 13, **dadurch gekennzeichnet, daß** die Transporteinrichtung (14) im Laderaum (1) ein Transportteppich ist.

15. System nach einem der Ansprüche 10 bis 14, **dadurch gekennzeichnet, daß** die Zwischenfördereinrichtung (2, 2', 2", 2"', 2"") wenigstens ein in Förderrichtung längenveränderbares erstes Förderorgan (8), vorzugsweise ein Förderband, aufweist, das beim Beladen Stückgut (6) im Bereich der Laderaumöffnung vom flugzeugseitigen Ende des äußeren Förderorgans (4) entgegennimmt und quer zur Flugzeuglängsachse weiterfördert, wobei sich an dessen flugzeugrumpfinneren Ende ein weiteres Förderorgan (10, 10', 10", 10"', 10""), vorzugsweise ein Förderband, anschließt, welches das Stückgut (6) vom ersten Förderorgan (8) entgegennimmt und in Flugzeuglängsrichtung zum vorderen Ende der im Laderaum (1) vorhandenen Transporteinrichtung (14) fördert.

16. System nach Anspruch 15, **dadurch gekennzeichnet, daß** das zweite Förderorgan (10, 10', 10", 10"', 10"") beim Entladen Stückgut (6) vom vorderen Ende der im Laderaum (1) vorhandenen Transporteinrichtung (14) aufnimmt und in Flugzeuglängsrichtung weg fördert und an das erste Förderorgan (8) übergibt, welches das Stückgut (6) quer zur Flugzeuglängsachse zur Laderaumöffnung fördert und an das äußere Förderorgan (4) zur Weiterförderung übergibt.

17. System nach Anspruch 15 oder 16, **dadurch gekennzeichnet, daß** das flugzeugrumpfinnere Ende des ersten Förderorgans (8) der Zwischenfördereinrichtung (2, 2', 2", 2"', 2"") über eine Schulter an einer im GepäckLaderaum (1) senkrecht orientierten ersten Schiene längs derselben vertikal verschieblich angelenkt ist, zur Höhenverstellung im Gepäckladeraum.

18. System nach Anspruch 17, **dadurch gekennzeichnet, daß** die senkrecht orientierte erste Schiene ihrerseits von wenigstens einer an der Decke oder dem Boden befestigten waagerecht orientierten zweiten Schiene geführt ist, zur Verschiebung des Anlenkpunktes quer zur Flugzeuglängsachse.

19. System nach einem der Ansprüche 15 bis 18, **dadurch gekennzeichnet, daß** das zweite Förderorgan (10, 10', 10", 10"', 10"") der Zwischenfördereinrichtung (2, 2', 2", 2"', 2" ") relativ zum ersten Förderorgan (8) derselben verschieblich gelagert ist, vorzugsweise quer zur Flugzeuglängsachse.

20. System nach einem der Ansprüche 15 bis 19, **dadurch gekennzeichnet, daß** das zweite Förderorgan (10, 10', 10", 10"', 10"") in Flugzeuglängsrichtung längenveränderbar ist.

21. System nach einem der Ansprüche 15 bis 20, **dadurch gekennzeichnet, daß** das zweite Förderorgan (10, 10', 10", 10"', 10"") einen in Flugzeuglängsrichtung beweglichen Schieber (22) aufweist.

22. System nach einem der Ansprüche 15 bis 21, **dadurch gekennzeichnet, daß** das zweite Förderorgan (10, 10', 10", 10'", 10"") eine schräg anstellbare Gleitfläche (28) aufweist.

23. System nach einem der Ansprüche 10 bis 22, **dadurch gekennzeichnet, daß** die Zwischenfördereinrichtung (2, 2', 2", 2''', 2"") oder das zweite Förderorgan (10, 10', 10", 10'", 10"") zum Entladen einen Greifer (32, 36) zum Erfassen von Stückgut (6) aufweist.

24. System nach einem der Ansprüche 10 bis 23, **dadurch gekennzeichnet, daß** das zweite Förderorgan (10, 10', 10", 10'", 10"") der Zwischenfördereinrichtung (2, 2', 2", 2"', 2"") ein Förderband ist, das über einer darunter angeordneten steifen Gleitplatte (18) verläuft, wobei die Gleitplatte (18) mit dem Förderband zwischen zwei Stückgüter (6) einschiebbar ist und wobei das obere Stückgut mit dem Förderband (6) wegförderbar ist.

25. Zwischenfördereinrichtung (2, 2', 2", 2"', 2"") zum Be- und Entladen von Stückgut (6) in Laderäumen von Flugzeugen, insbesondere zur Verwendung in einem System zum Be- und Entladen von Stückgut (6) nach einem der Ansprüche 10 bis 24,
**dadurch gekennzeichnet, daß**
diese wenigstens ein in Förderrichtung längenveränderbares erstes Förderorgan (8), vorzugsweise ein Förderband, aufweist, das beim Beladen Stückgut (6) im Bereich der Laderaumöffnung vom flugzeugseitigen Ende des äußeren Förderorgans (4) entgegennimmt und quer zur Flugzeuglängsachse weiterfördert, wobei sich an dessen flugzeugrumpfinneren Ende ein weiteres Förderorgan (10, 10', 10", 10"', 10""), vorzugsweise ein Förderband, anschließt, welches das Stückgut (6) vom ersten Förderorgan (8) entgegennimmt und in Flugzeuglängsrichtung zum vorderen Ende der im Laderaum (1) vorhandenen Transporteinrichtung (14) fördert.

26. Zwischenfördereinrichtung (2, 2', 2", 2"', 2"") nach Anspruch 25, **dadurch gekennzeichnet, daß** das zweite Förderorgan (10, 10', 10", 10'", 10"") beim Entladen Stückgut (6) vom vorderen Ende der im Laderaum (1) vorhandenen Transporteinrichtung (14) aufnimmt und in Flugzeuglängsrichtung weg fördert und an das erste Förderorgan (8) übergibt, welches das Stückgut (6) quer zur Flugzeuglängsachse zur Laderaumöffnung fördert und an das äußere Förderorgan (4) zur Weiterförderung übergibt.

27. Zwischenfördereinrichtung (2, 2', 2", 2"', 2"") nach Anspruch 25 oder 26, **dadurch gekennzeichnet, daß** das flugzeugrumpfinnere Ende des ersten Förderorgans (8) der Zwischenfördereinrichtung (2, 2', 2", 2"', 2"") über eine Schulter an einer im Gepäckladeraum senkrecht orientierten ersten Schiene längs derselben vertikal verschieblich angelenkt ist, zur Höhenverstellung im Gepäckladeraum.

28. Zwischenfördereinrichtung (2, 2', 2", 2"', 2"") nach einem der Ansprüche 25 bis 27, **dadurch gekennzeichnet, daß** die senkrecht orientierte erste Schiene ihrerseits von wenigstens einer an der Decke oder dem Boden befestigten waagerecht orientierten zweiten Schiene geführt ist, zur Verschiebung des Anlenkpunktes quer zur Flugzeuglängsachse.

29. Zwischenfördereinrichtung (2, 2', 2", 2"', 2"") nach einem der Ansprüche 25 bis 28, **gekennzeichnet durch** wenigstens eines der Merkmale gemäß der Ansprüche 19 bis 24.

30. System zum Be- und Entladen von Stückgut in einem Laderaum (100), insbesondere eines Flugzeugs, mit
einer den Boden des Laderaumes (100) flächig abdeckenden Transporteinrichtung (102) zur, insbesondere taktweisen, Förderung des Stückgutes in Richtung auf das innere Ende des Laderaumes (100) beim Beladen bzw. von diesem weg beim Entladen, wobei die Transporteinrichtung (102) mit deren vorderem Ende (120) bis in den Bereich der Laderaumöffnung (104) im Flugzeugrumpf reicht, und mit
einem an der Außenseite des Flugzeuges an die Laderaumöffnung anschließenden Förderorgan (108) zum Transport des Stückgutes zwischen der Rollfeldebene (110) und der Laderaumöffnung (104),
**dadurch gekennzeichnet, daß**
zwischen dem flugzeugseitigen Ende des äußeren Förderorgans (108) und dem vorderen Ende (120) der Transporteinrichtung (102) im Laderaum (100) wenigstens eine Zwischenfördereinrichtung (112) angeordnet ist, mit der das Stückgut beim Beladen zunächst im wesentlichen quer zur Flugzeuglängsachse tiefer in den Flugzeugrumpf hinein förderbar ist, und woraufhin das Stückgut dann im Laderaum (100) manuell drehbar und weiter im wesentlichen in Flugzeuglängsrichtung beförderbar und auf dem vorderen Ende (120) der Transporteinrichtung (102) im Laderaum (100) ablegbar ist, und
mit der beim Entladen über das vordere Ende (120) der Transporteinrichtung (102) hinaus in die Ebene der Laderaumöffnung (104) gefördertes Stückgut im wesentlichen quer zur Flugzeuglängsachse durch die Laderaumöffnung (104) hindurch weg förderbar ist.

31. System nach Anspruch 20, **dadurch gekennzeichnet, daß** es wenigstens eines der Merkmale des Systems gemäß wenigstens einem der Ansprüche 10 bis 14 aufweist.

32. System nach Anspruch 30 oder 31, **dadurch gekennzeichnet, daß** die Zwischenfördereinrichtung (112) an deren Unterseite im Überlappungsbereich (122) mit dem äußeren Förderorgan (108) ein Gleitelement, vorzugsweise ein Rad, aufweist, zur verschieblichen Abstützung der Zwischenfördereinrichtung (112) auf der Oberseite (124) des äußeren Förderorgans (108) in dessen Endbereich.

33. System nach einem der Ansprüche 30 bis 32, **dadurch gekennzeichnet, daß** an der Zwischenfördereinrichtung (112) im Überlappungsbereich (122) mit dem äußeren Förderorgan (108) ein Ausleger (126) angelenkt ist, der sich mit dessen von der Zwischenfördereinrichtung (112) wegweisenden Ende vermittels eines dort angelenkten Gelenks gegen eine Gleitschiene (128) abstützt, die parallel zur Längsrichtung des äußeren Förderorgans (108) orientiert und an diesem befestigt ist, zur verschieblichen Abstützung der Zwischenfördereinrichtung (112) in Förderrichtung des äußeren Förderorgans (108).

34. System nach einem der Ansprüche 30 bis 33, **dadurch gekennzeichnet, daß** das dem vorderen Ende (120) der Transporteinrichtung (102) im Laderaum (100) zugewandte Ende (118) der Zwischenfördereinrichtung (112) in der Höhe veränderbar ist relativ zum dem äußeren Förderorgan (108) zugewandten Anfang (116) der Zwischenfördereinrichtung (112).

35. System nach einem der Ansprüche 30 bis 34, **dadurch gekennzeichnet, daß** ein Endabschnitt (132) der Zwischenfördereinrichtung (112) derart um eine Achse (134) quer zur Förderrichtung der Zwischenfördereinrichtung (112) verschwenkbar ist, daß dieser Endabschnitt (132) horizontal ausrichtbar ist.

36. System nach einem der Ansprüche 30 bis 35, **dadurch gekennzeichnet, daß** ein Anfangsabschnitt (136) der Zwischenfördereinrichtung (112) mit einem vorbestimmten Neigungswinkel, vorzugsweise zwischen 10° bis 30°, zum Neigungswinkel des äußeren Förderorgans (108) orientiert ist.

37. System nach einem der Ansprüche 30 bis 36, **dadurch gekennzeichnet, daß** die Zwischenfördereinrichtung (112) mit deren Förderrichtung für die Förderung von Stückgut im wesentlichen quer zur Flugzeuglängsachse um einen Winkelbereich von etwa -30° bis +30° relativ zur Förderrichtung des äußeren Förderorgans (108) verschwenkbar ist.

38. System nach einem der Ansprüche 30 bis 37, **dadurch gekennzeichnet, daß** Teile der tragenden Struktur der Zwischenfördereinrichtung (112) aus leichten Werkstoffen, wie beispielsweise Aluminium oder Faserverbundwerkstoffen hergestellt sind.

39. Zwischenfördereinrichtung (112) zum Be- und Entladen von Stückgut in Laderäumen von Flugzeugen, insbesondere zur Verwendung in einem System zum Be- und Entladen von Stückgut nach einem der Ansprüche 10 bis 24 oder nach einem der Ansprüche 30 bis 38,
**dadurch gekennzeichnet, daß**
die Zwischenfördereinrichtung (112) wenigstens einen ersten sich gegen ein äußeres Förderorgan (108) abstützenden Rahmen (138) mit einem ersten Förderorgan (140), vorzugsweise ein erstes Förderband, aufweist, das beim Beladen Stückgut, vorzugsweise im Bereich vor der Laderaumöffnung (104) des Flugzeugs, vom flugzeugzugewandten Ende (122) des äußeren Förderorgans (108) entgegennimmt und im wesentlichen quer zur Flugzeuglängsachse weiterfördert,
wobei sich an das Ende (142) des ersten Förderorgans (140) ein zweites Förderorgan (144), vorzugsweise ein zweites Förderband, anschließt, vorzugsweise zur Überbrückung der Distanz vom Ende (122) des äußeren Förderorgans (108) ins Innnere des Laderaums (100), das beim Beladen Stückgut, vorzugsweise im Bereich der Laderaumöffnung (104) des Flugzeugs, vom Ende (142) des ersten Förderorgans (140) entgegennimmt und im wesentlichen quer zur Flugzeuglängsachse weiterfördert,
wobei sich an dessen Ende (146) ein drittes Förderorgan (148), vorzugsweise eine Rollenplatte, anschließt, das beim Beladen Stückgut vom Ende (146) des zweiten Förderorgans (144) entgegennimmt und eine manuelle Drehung des darauf drehbar liegenden Stückguts derart erlaubt, daß das Stückgut im wesentlichen in Flugzeuglängsrichtung zum vorderen Ende (120) einer im Laderaum (100) vorhandenen Transporteinrichtung (102) hin weiterbeförderbar ist.

40. Zwischenfördereinrichtung (112) nach Anspruch 39, **dadurch gekennzeichnet, daß** Stückgut beim Entladen vom vorderen Ende (120) der im Laderaum (100) vorhandenen Transporteinrichtung (102) im wesentlichen in Flugzeuglängsrichtung manuell auf das dritte Förderorgan (148) aufbringbar ist, dort drehbar gelagert und an das zweite Förderorgan (144) übergebbar abgestützt ist, wobei das zweite Förderorgan (144) das Stückgut im wesentlichen quer zur Flugzeuglängsachse zur Laderaumöffnung (104) und/oder durch diese hindurch fördert und an das erste Förderorgan (140) übergibt, welches das Stückgut im wesentlichen quer zur Flugzeuglängsachse zum äußeren Förderorgan (108) weiterfördert und an dieses zur Weiterförderung übergibt.

41. Zwischenfördereinrichtung (112) nach Anspruch 39 oder 40, **dadurch gekennzeichnet, daß** der Rahmen (138) des ersten Förderorgans (140) an dessen Unterseite ein Gleitelement, vorzugsweise ein Rad, aufweist, zur im wesentlichen in Förderrichtung des äußeren Förderorgans (108) verschieblichen Abstützung des ersten Förderorgans (140) auf der Oberseite (124) des äußeren Förderorgans (108) im Bereich dessen flugzeugzugewandten Endabschnitts (122).

42. Zwischenfördereinrichtung (112) nach einem der Ansprüche 39 bis 41, **dadurch gekennzeichnet, daß** am Rahmen (138) des ersten Förderorgans (140) ein Ausleger (126), vorzugsweise ein zwei-armiger Ausleger, angelenkt ist, der sich mit dessen vom Rahmen (138) wegweisenden Ende vermittels eines dort angelenkten Gelenks gegen eine Gleitschiene (128) abstützt, die parallel zur Längsrichtung des äußeren Förderorgans (108) orientiert und an diesem befestigt ist, zur im wesentlichen in Förderrichtung des äußeren Förderorgans (108) verschieblichen Abstützung des ersten Förderorgans (140) an dem äußeren Förderorgan (108).

43. Zwischenfördereinrichtung (112) nach einem der Ansprüche 39 bis 42, **dadurch gekennzeichnet, daß** das zweite Förderorgan (144) derart am Rahmen (138) des ersten Förderorgans (140) angelenkt ist, daß es um eine Achse (154) quer zur Förderrichtung, vorzugsweise um einen Winkelbereich von - 15° bis +45°, verschwenkbar ist, zur Veränderung der Höhe des Endes (146) des zweiten Förderorgans (144) relativ zu dessen Anfang.

44. Zwischenfördereinrichtung (112) nach einem der Ansprüche 39 bis 43, **dadurch gekennzeichnet, daß** das dritte Förderorgan (148) derart am Ende (146) des zweiten Förderorgans (144) angelenkt ist, daß es um eine Achse (134) quer zur Förderrichtung des zweiten Förderorgans (144) verschwenkbar ist, so daß es horizontal ausrichtbar ist.

45. Zwischenfördereinrichtung (112) nach einem der Ansprüche 39 bis 44, **dadurch gekennzeichnet, daß** das erste Förderorgan (140) mit dessen Rahmen (138) derart verschwenkbar auf dem äußeren Förderorgan (108) abgestützt ist, daß eine Verschwenkbarkeit der Zwischenfördereinrichtung (112) um einen Winkelbereich von etwa -30° bis +30° relativ zur Förderrichtung des äußeren Förderorgans (108) wählbar ist.

46. Zwischenfördereinrichtung (112) nach einem der Ansprüche 39 bis 45, **dadurch gekennzeichnet, daß** dem zweiten und/oder dem dritten Förderorgan (144, 148) dessen Hub-, Senk-, oder Schwenk-Bewegung unterstützende Elemente zugeordnet sind, wie beispielsweise ein beidseits der Ränder eines Förderorgans angeordneter Parallelogramm-Lenker zur Unterstützung einer Hub-, Senk- oder Schwenk-Bewegung, damit derlei Bewegungen von einer im Laderaum (100) tätigen Person näherungsweise kraftfrei vorgegeben werden können.

47. Zwischenfördereinrichtung (112) nach einem der Ansprüche 39 bis 46, **dadurch gekennzeichnet, daß** im Bereich des dritten Förderorgans (148) ein Multifunktions-Bedienelement vorgesehen ist, vermittels dem beispielsweise die horizontale Ausrichtung des dritten Förderorgans (148), die Neigung des zweiten Förderorgans (144), die Positionierung des ersten Förderorgans (140) auf dem äußeren Förderorgan (108), die Förderrichtung, die Fördergeschwindigkeit oder weitere Funktionen steuerbar sind.

48. Zwischenfördereinrichtung (112) zum Be- und Entladen von Stückgut in Laderäumen von Flugzeugen, insbesondere zur Verwendung in einem System zum Be- und Entladen von Stückgut nach einem der Ansprüche 10 bis 24 oder nach einem der Ansprüche 30 bis 38,
**dadurch gekennzeichnet, daß**
die Zwischenfördereinrichtung (112) wenigstens einen ersten sich gegen einen Endabschnitt eines äußeren bodengestützten von draußen bis in den Laderaum des Flugzeugs hinein reichenden Förderorgans abstützenden Rahmen (138) mit einem ersten Förderorgan (140), vorzugsweise ein erstes Förderband, aufweist, das beim Beladen Stückgut vom Endabschnitt des bodengestützten Förderorgans entgegennimmt und weiterfördert,
wobei sich an das Ende (142) des ersten Förderorgans (140) ein zweites Förderorgan (144), vorzugsweise ein zweites Förderband, anschließt, vorzugsweise zur Überbrückung der Distanz vom Endabschnitt des bodengestützten Förderorgans zum Ablageplatz des Stückguts im Laderaum (100), das beim Beladen Stückgut vom Ende (142) des ersten Förderorgans (140) entgegennimmt und weiterfördert,
wobei sich an dessen Ende (146) ein drittes Förderorgan (148), vorzugsweise eine Rollenplatte, anschließt, das beim Beladen Stückgut vom Ende (146) des zweiten Förderorgans (144) entgegennimmt und eine manuelle Drehung des darauf drehbar liegenden Stückguts derart erlaubt, daß das Stückgut im wesentlichen in Flugzeuglängsrichtung zum Ablageplatz des Stückguts im Laderaum (100) weiterbeförderbar ist.

49. Zwischenfördereinrichtung (112) nach Anspruch 48, **dadurch gekennzeichnet, daß** Stückgut beim Entladen von dessen Ablageplatz im Laderaum (100), vorzugsweise im wesentlichen in Flugzeuglängsrichtung, manuell auf das dritte Förderorgan (148) aufbringbar ist, dort drehbar gelagert und an das zweite Förderorgan (144) übergebbar abgestützt ist, wobei das zweite Förderorgan (144) das Stückgut weiterfördert und an das erste Förderorgan (140) übergibt, welches das Stückgut zum Endabschnitt des bodengestützten von außen bis in den Laderaum (100) des Flugzeugs reichenden Förderorgans weiterfördert und an dieses zur Weiterförderung übergibt.

50. Zwischenfördereinrichtung (112) nach Anspruch 48 oder 49, **dadurch gekennzeichnet, daß** sie wenigstens eines der Merkmale der Zwischenfördereinrichtung (112) nach wenigstens einem der Ansprüche 39 bis 45 aufweist.

51. Zwischenfördereinrichtung (112) nach einem der Ansprüche 48 bis 50, **dadurch gekennzeichnet, daß** dem zweiten und/oder dem dritten Förderorgan (144, 148) dessen Hub-, Senk-, oder Schwenk-Bewegung unterstützende Elemente zugeordnet sind, wie beispielsweise ein beidseits der Ränder eines Förderorgans angeordneter Parallelogramm-Lenker zur Unterstützung einer Hub-, Senk- oder Schwenk-Bewegung, damit derlei Bewegungen von einer im Laderaum (100) tätigen Person näherungsweise kraftfrei vorgegeben werden können.

52. Zwischenfördereinrichtung (112) nach einem der Ansprüche 48 bis 51, **dadurch gekennzeichnet, daß** im Bereich des dritten Förderorgans (148) ein Multifunktions-Bedienelement vorgesehen ist, vermittels dem beispielsweise die horizontale Ausrichtung des dritten Förderorgans (148), die Neigung des zweiten Förderorgans (144), die Positionierung des ersten Förderorgans (140) auf dem äußeren Förderorgan (108), die Förderrichtung, die Fördergeschwindigkeit oder weitere Funktionen steuerbar sind.

53. Zwischenfördereinrichtung (112) nach einem der Ansprüche 48 bis 52, **dadurch gekennzeichnet, daß** das Stückgut (6) im Laderaum (1) beim Beladen gezielt am Ablageplatz ablegbar und beim Entladen von dort gezielt wegförderbar ist.

54. Zwischenfördereinrichtung (112) nach einem der Ansprüche 48 bis 53, **dadurch gekennzeichnet, daß** das dritte Förderorgan (148) einen beweglichen Schieber (22) aufweist.

55. Zwischenfördereinrichtung (112) nach einem der Ansprüche 48 bis 54, **dadurch gekennzeichnet, daß** das dritte Förderorgan (148) eine schräg anstellbare Gleitfläche (28) aufweist.

56. Zwischenfördereinrichtung (112) nach einem der Ansprüche 48 bis 55, **dadurch gekennzeichnet, daß** das dritte Förderorgan (148) zum Entladen einen Greifer (32, 36) zum Erfassen von Stückgut (6) aufweist.

57. Zwischenfördereinrichtung (112) nach einem der Ansprüche 48 bis 56, **dadurch gekennzeichnet, daß** das dritte Förderorgan (148) ein Förderband aufweist, das über einer darunter angeordneten steifen Gleitplatte (18) verläuft, wobei die Gleitplatte (18) mit dem Förderband zwischen zwei Stückgüter (6) einschiebbar ist und wobei das obere Stückgut mit dem Förderband (6) wegförderbar ist.

58. Zwischenfördereinrichtung (112) nach einem der Ansprüche 48 bis 57, **dadurch gekennzeichnet, daß** mit der Zwischenfördereinrichtung (112) kommunizierende Sensoren, Kameras, Regelkreise, künstliche Intelligenz oder dergleichen vorgesehen sind.
